(19) Europäisches Patentamt
European Patent Office
Office européen des brevets

(11) **EP 4 761 412 A1**

(12) **EUROPEAN PATENT APPLICATION**
published in accordance with Art. 153(4) EPC

(43) Date of publication:
**17.06.2026 Bulletin 2026/25**

(21) Application number: **24852119.7**

(22) Date of filing: **22.07.2024**

(51) International Patent Classification (IPC):
**H04W 72/0453** (2023.01) **H04W 72/23** (2023.01)
**H04W 48/10** (2009.01) **H04W 72/53** (2023.01)
**H04J 11/00** (2006.01) **H04L 1/00** (2006.01)
**H04L 27/26** (2006.01)

(52) Cooperative Patent Classification (CPC):
**H04J 11/00; H04L 1/00; H04L 27/26; H04W 48/10;
H04W 72/0453; H04W 72/23; H04W 72/53**

(86) International application number:
**PCT/KR2024/010537**

(87) International publication number:
**WO 2025/033763 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 US 202363532057 P**

(71) Applicant: **LG Electronics Inc.**
**Yeongdeungpo-gu
Seoul 07336 (KR)**

(72) Inventors:
• **KIM, Jaehyung**
  **Seoul 06772 (KR)**
• **YANG, Suckchel**
  **Seoul 06772 (KR)**
• **KIM, Seonwook**
  **Seoul 06772 (KR)**

(74) Representative: **Jung, Minkyu**
**Wuesthoff & Wuesthoff
Patentanwälte und Rechtsanwalt PartG mbB
Schweigerstraße 2
81541 München (DE)**

(54) **METHOD FOR TRANSMISSION AND RECEPTION OF PDCCH, AND DEVICE THEREFOR**

(57) A method according to an embodiment of the present specification comprises the steps of: receiving an SS/PBCH block; and receiving a PDCCH on the basis of a CORESET. An offset is determined on the basis of a configuration related to the CORESET. The offset is defined from a smallest RB index of the CORESET to an RB index related to the SS/PBCH block. On the basis that i) a channel bandwidth is 3 MHz, ii) an SCS of the SS/PBCH block is 15 kHz, and iii) an SCS of the CORESET is 15 kHz, the offset is one of i) 0 and ii) 2, and the RB index is determined on the basis of the first RB of the SS/PBCH block after puncturing.

【FIG. 21】

**Description**

[Technical Field]

The present disclosure relates to a method for transmission and reception of a PDCCH and a device therefor.

[Background Art]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

In order to efficiently support various use cases in 5G in terms of cost/complexity, a maximum bandwidth of newly introduced UE types may be reduced. For example, the maximum bandwidth may be reduced to 3 MHz.

If the maximum bandwidth is reduced (e.g., 3 MHz), the UE will not be able to receive the entire SSB. To prevent this, the SSB can be transmitted in a punctured resource region. Meanwhile, Point A, which serves as a common reference point for resource block grids, can be obtained based on the lowest subcarrier of the lowest resource block overlapping with the SSB.

In accordance with the reduced channel bandwidth, a synchronization raster that is arranged at a spacing of 600 kHz, which is narrower than the conventional spacing of 1.2 MHz, is newly supported/defined. The position of Control Resource Set #0 (CORESET #0) in the frequency domain may be determined relative to the SSB. As a specific example, the spacing between CORESET #0 and the SSB may be determined based on an offset and $k_{SSB}$. Here, the offset represents the number of resource blocks, and $k_{SSB}$ represents the number of subcarriers.

[Disclosure]

[Technical Problem]

According to the prior art, the offset is defined as a distance from the smallest RB index of CORESET #0 to an RB index related to the SSB. Also, the offset is indicated/determined as one of predefined/preconfigured values (e.g., values defined in a table). At this time, the subcarrier spacing (SCS) of the SSB and the subcarrier spacing of the CORESET may be identical (e.g., 15 kHz). According to the newly introduced/supported synchronization raster, the position of the SSB that serves as a reference for the frequency-domain position of CORESET #0 is changed.

Accordingly, when the conventional definition and the conventional values of the offset are directly used, a position of CORESET #0 determined based on the corresponding offset may not be aligned with the subcarrier spacing.

An object of the present disclosure is to propose a method for addressing the problem above.

Technical objects to be achieved by the present disclosure are not limited to the aforementioned technical objects, and other technical objects not described above may be evidently understood by a person having ordinary skill in the art to which the present disclosure pertains from the following description.

[Technical Solution]

A method performed by a user equipment according to one embodiment of the present disclosure includes receiving a Synchronization Signal/Physical Broadcast Channel (SS/PBCH) block based on a synchronization raster for a channel bandwidth and receiving a Physical Downlink Control Channel (PDCCH) based on a COntrol REsource SET (CORESET).

An offset is determined based on a configuration related to the CORESET.

The offset is defined from the smallest Resource Block (RB) index of the CORESET to an RB index related to the SS/PBCH block.

Based on i) the channel bandwidth being 3 MHz, ii) a SubCarrier Spacing (SCS) of the SS/PBCH block being 15 kHz, and iii) an SCS of the CORESET being 15 kHz:

The offset is one of i) 0 and ii) 2, and the RB index is determined based on a first RB of the SS/PBCH block after puncturing.

The RB index may be the smallest RB index of a common resource block overlapping with the first RB of the SS/PBCH block after the puncturing.

i) The configuration related to the CORESET and ii) $k_{SSB}$ may be indicated based on a Master Information Block (MIB) related to the SS/PBCH block.

The $k_{SSB}$ may be a subcarrier offset from subcarrier 0 of the common resource block to a lowest-numbered subcarrier of the SS/PBCH block after the puncturing.

Based on the offset being 0, the $k_{SSB}$ may be 8. Based on the offset being 2, the $k_{SSB}$ may be 4.

The offset may be defined with respect to the SCS of the CORESET.

The synchronization raster may be related to an operating band.

For the channel bandwidth of 3 MHz, the operating band may be n26, n28, n31, n72, n85, n100, or n106.

A frequency position based on the synchronization raster may be determined based on the following equation.

[Equation]

$$\text{frequency position} = N \times 600\ \text{kHz} + M \times 50\ \text{kHz} + 300\ \text{kHz},$$

where N is an integer greater than or equal to 1, and M may be 1, 3, or 5.

Within the operating band, a frequency based on a channel raster may be defined at a spacing of 100 kHz.

The number of RBs based on the channel bandwidth of 3 MHz may be 15.

After the puncturing, the SS/PBCH block may be based on 12 RBs.

The number of RBs may be determined based on the configuration related to the CORESET, and the number of RBs may be 12 or 24.

Based on the number of RBs being 24, the CORESET may include 15 RBs obtained based on puncturing of 9 RBs among the 24 RBs.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories. The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure includes transmitting a Synchronization Signal/Physical Broadcast Channel (SS/PBCH) block based on a synchronization raster for a channel bandwidth and transmitting a Physical Downlink Control Channel (PDCCH) based on a COntrol REsource SET (CORESET).

An offset is determined based on a configuration related to the CORESET.

The offset is defined from the smallest Resource Block (RB) index of the CORESET to an RB index related to the SS/PBCH block.

Based on i) the channel bandwidth being 3 MHz, ii) a SubCarrier Spacing (SCS) of the SS/PBCH block being 15 kHz, and iii) an SCS of the CORESET being 15 kHz:

The offset is one of i) 0 and ii) 2, and the RB index is determined based on a first RB of the SS/PBCH block after puncturing.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[Advantageous Effects]

According to an embodiment of the present disclosure, a position of CORESET #0 identified based on an SSB may be determined as a valid position from a subcarrier spacing perspective. Accordingly, PDCCH reception performance based on CORESET #0 in a narrowband may be improved. A UE may stably receive system information (e.g., SIB1) based on the corresponding PDCCH.

Also, by resolving issues that may occur when supporting narrowband UE/spectrum scenarios, the present disclosure may contribute to expanding use case scenarios of an NR system.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[Description of Drawings]

FIG. 1 illustrates an example of a frame structure in an NR system.

FIG. 2 illustrates an example of a resource grid in NR.

FIG. 3 illustrates physical channels and general signal transmission used in a 3GPP system.

FIG. 4 is a diagram illustrating an SSB structure to which a method proposed in the present disclosure is applicable.

FIG. 5 illustrates SSB transmission to which a method proposed in the present disclosure is applicable.

FIG. 6 is a flow chart illustrating reception of DL signals/channels in an initial access procedure to which a method according to an embodiment of the present disclosure is applicable.

FIG. 7 illustrates an example of a time-frequency structure of SSB according to an embodiment of the present disclosure.

FIG. 8 illustrates an example of a frequency resource domain for PBCH transmission/reception according to an embodiment of the present disclosure.

FIG. 9 illustrates an example of a frequency resource domain for PBCH transmission/reception according to another embodiment of the present disclosure.

FIG. 10 illustrates an example of a sync raster according to an embodiment of the present disclosure.

FIG. 11 illustrates another example of a sync raster according to an embodiment of the present disclosure.

FIG. 12 illustrates point A according to an existing method.

FIG. 13 illustrates point A according to an embodiment of the present disclosure.

FIG. 14 illustrates CORESET #0 according to one embodiment of the present disclosure.

FIG. 15 illustrates one example of a channel raster and a sync raster based on an embodiment of the present disclosure.

FIG. 16 illustrates another example of a channel raster and a sync raster based on an embodiment of the present disclosure.

FIG. 17 illustrates yet another example of a channel raster and a sync raster based on an embodiment of the present disclosure.

FIG. 18 illustrates valid offset values among offset values between CORESET #0 and a sync raster based on an embodiment of the present disclosure.

FIG. 19 illustrates one example of a valid offset value between CORESET #0 and a sync raster in a specific frequency band based on an embodiment of the present disclosure.

FIG. 20 illustrates another example of a valid offset value between CORESET #0 and a sync raster in a specific frequency band based on an embodiment of the present disclosure.

FIG. 21 is a flowchart illustrating a method performed by a user equipment according to an embodiment of the present disclosure.

FIG. 22 is a flowchart illustrating a method performed by a base station according to another embodiment of the present disclosure.

FIG. 23 illustrates configuration of a first device and a second device according to an embodiment of the present disclosure.

[Mode for Invention]

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system.

Matters disclosed in a standard document opened before the disclosure may be referred to for a background art, terms, omissions, etc., used for describing the disclosure. For example, the following documents may be referred to.

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

## New Rat (NR) Numerology and Frame Structure

In the NR system, multiple numerologies may be supported. The numerologies may be defined by subcarrier spacing and a cyclic prefix (CP) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1. $\mu$ for a bandwidth part and the cyclic prefix are obtained from RRC parameters provided by the BS.

[Table 1]

| $\mu$ | $\Delta f = 2^{\mu} * 15$ [kHz] | Cyclic Prefix (CP) |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges FR1 and FR2. FR1 may denote sub 6 GHz range, and FR2 may denote above 6 GHz range and may mean millimeter wave (mmW).

Table 2 below shows an example of definition of the NR frequency band.

[Table 2]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$ . In this case, $\Delta f_{max} = 480 \cdot 10^3$ , and $N_f = 4096$. DL and UL transmission is configured as a radio frame having a section of $T_f = (\Delta f_{max} N_f /100) \cdot T_s = 10$ ms . The radio frame is composed of ten subframes each having a section of $T_{sf} = (\Delta f_{max} N_f /1000) \cdot T_s = 1$ ms. In this case, there may be a set of UL frames and a set of DL frames.

Uplink frame number i for transmission from a user equipment (UE) shall start $T_{TA} = N_{TA} T_s$ before the start of a corresponding downlink frame at the corresponding UE.

Regarding the numerology $\mu$, slots are numbered in increasing order of $n_s^{\mu} \in \left\{ 0,..., N_{subframe}^{slots,\mu} - 1 \right\}$ within a subframe and are numbered in increasing order of $n_{s,f}^{\mu} \in \left\{ 0,..., N_{frame}^{slots,\mu} - 1 \right\}$ within a radio frame. One slot consists of consecutive OFDM symbols of $N_{symb}^{\mu}$ , and $N_{symb}^{\mu}$ is determined depending on a numerology used and slot configuration. The start of slots $n_s^{\mu}$ in a subframe is aligned in time with the start of OFDM symbols $n_s^{\mu} N_{symb}^{\mu}$ in

the same subframe.

Not all UEs are able to transmit and receive at the same time, and this means that not all OFDM symbols in a downlink slot or an uplink slot are available to be used.

Table 3 represents the number $N_{\text{symb}}^{\text{slot}}$ of OFDM symbols per slot, the number $N_{\text{slot}}^{\text{frame},\mu}$ of slots per radio frame, and the number $N_{\text{slot}}^{\text{subframe},\mu}$ of slots per subframe in a normal CP. Table 4 represents the number of OFDM symbols per slot, the number of slots per radio frame, and the number of slots per subframe in an extended CP.

[Table 3]

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

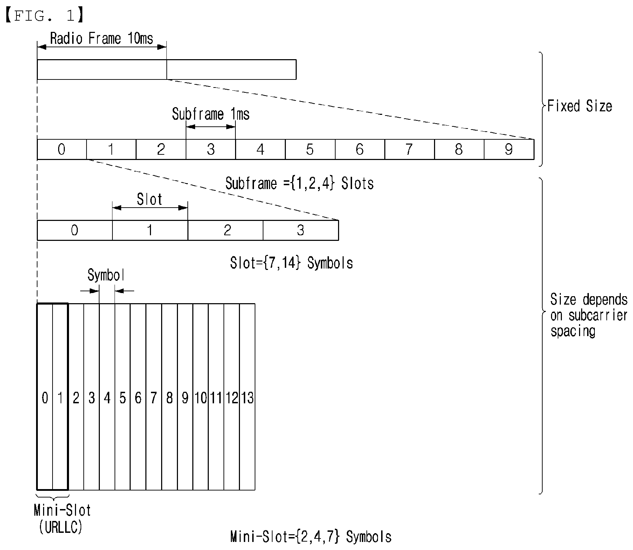

FIG. 1 illustrates an example of a frame structure in a NR system. FIG. 1 is merely for convenience of explanation and

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

does not limit the scope of the disclosure.

In Table 4, in case of $\mu$ = 2, i.e., as an example in which a subcarrier spacing (SCS) is 60 kHz, one subframe (or frame) may include four slots with reference to Table 3, and one subframe = {1, 2, 4} slots shown in FIG. 1, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

The physical resources that may be considered in the NR system are described in detail below.

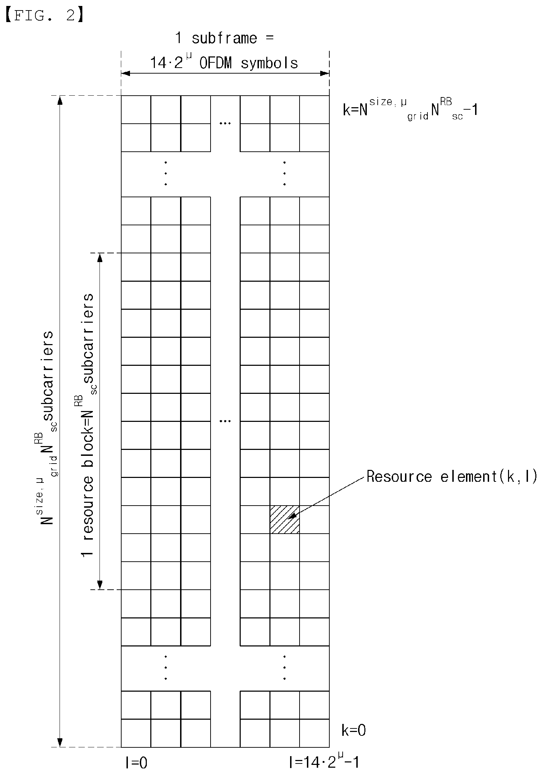

FIG. 2 illustrates an example of a resource grid supported in NR.

Referring to FIG. 2, for each subcarrier spacing configuration and carrier, a resource grid of $N_{grid}^{size,\mu} * N_{sc}^{RB}$ subcarriers and $14 \cdot 2^\mu$ OFDM symbols is defined, where $N_{grid}^{size,\mu}$ is indicated by RRC signaling from the BS. $N_{grid}^{size,\mu}$ may change between uplink and downlink as well as the subcarrier spacing configuration $\mu$.

Each element of the resource grid for the numerology $\mu$ and the antenna port p is called a resource element and is uniquely identified by an index pair $(k, \bar{l})$, where $k = 0,..., N_{\text{RB}}^\mu N_{\text{sc}}^{\text{RB}} - 1$ is an index on a frequency domain, and $\bar{l} = 0,...,2^\mu N_{\text{symb}}^{(\mu)} - 1$ refers to a location of a symbol in a subframe. The index pair $(k, l)$ is used to refer to a resource element in a slot, where $l = 0,...,N_{\text{symb}}^\mu - 1$.

The resource element $(k, \bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices $p$ and $\mu$ may

be dropped, and as a result, the complex value may be $a_{k,l}^{(p)}$ or $a_{k,l}$. Further, a physical resource block is defined as

$$N_{sc}^{RB} = 12$$ consecutive subcarriers in the frequency domain.

Considering that the UE may not be able to support a wide bandwidth to be supported in the NR system at one time, the UE may be configured to operate in a part of a frequency bandwidth of a cell (hereinafter, referred to as a bandwidth part (BWP)).

Resource blocks of the NR system include physical resource blocks defined in the bandwidth part and common resource blocks that are numbered upward from 0 in a frequency domain for the subcarrier spacing configuration $\mu$.

Point A serves as a common reference point of a resource block grid and may be obtained as follows.

- offsetToPointA for a PCell downlink represents a frequency offset between point A and the lowest subcarrier of the lowest resource block that overlaps with the SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents the frequency-location of point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{CRB}^{\mu}$ in the frequency domain and resource elements (k, I) for the subcarrier spacing configuration $\mu$ may be given by the following Equation 1.

【Equation 1】

$$n_{CRB}^{\mu} = \left\lfloor \frac{k}{N_{sc}^{RB}} \right\rfloor$$

Here, $k$ may be defined relative to point A so that $k = 0$ corresponds to a subcarrier centered around point A. Physical resource blocks are defined within a bandwidth part (BWP) and are numbered from 0 to $N_{BWP,i}^{size} - 1$ , where $i$ is a number of the BWP. A relation between the physical resource block $n_{PRB}$ in *BWP, i* and the common resource block $n_{CRB}$ may be given by the following Equation 2.

[Equation 2]

Here, $N_{BWP,i}^{start}$ may be the common resource block where the BWP starts relative to the common resource block 0.

$$n_{CRB} = n_{PRB} + N_{BWP,i}^{start}$$

**Bandwidth Part (BWP)**

In the NR system, up to 400 MHz can be supported per one carrier. If a UE operating in such a wideband carrier is always operated with a radio frequency (RF) module for all carriers turned on, battery consumption by the UE may increase. Alternatively, considering several use cases (e.g., eMBB, URLLC, mMTC, V2X, etc.) that are operated in one wideband carrier, different numerologies (e.g., subcarrier spacing) may be supported for each frequency band in the corresponding carrier. Alternatively, a capability for a maximum bandwidth may be different for each UE. Considering this, a base station (BS) may indicate the UE to operate only in a partial bandwidths rather than the entire bandwidth of a wideband carrier, and the partial bandwidth is defined as a bandwidth part (BWP). The BWP in the frequency domain is a subset of continuous common resource blocks defined for numerology $\mu$i within a bandwidth part i on the carrier, and one numerology (e.g., subcarrier spacing, CP length, slot/mini-slot duration) may be configured.

The BS may configure one or more BWPs within one carrier configured for the UE. Alternatively, if UEs are concentrated on a specific BWP, some UEs may be shifted to different BWPs for load balancing. Alternatively, both BWPs may be configured in the same slot excluding some center spectrums of the entire bandwidth considering frequency domain inter-cell interference cancellation between contiguous cells, etc. That is, the BS can configure at least one DL/UL BWP to a UE associated with the wideband carrier, can activate at least one DL/UL BWP of configured DL/UL BWP(s) at a specific time (by L1 signaling which is the physical layer control signal, MAC control element (CE) which is the MAC layer control signal, or RRC signaling, etc.) and indicate to switch to other configured DL/UL BWP (by L1 signaling, MAC CE, or RRC signaling, etc.), or can the UE to switch to a given DL/UL BWP if a timer value is set and a timer is expired. The activated DL/UL BWP is defined as an active DL/UL BWP. The UE may not receive configuration for the DL/UL BWP when the UE is in an initial access procedure or RRC connection of the UE is not set up yet. In this situation, a DL/UL BWP assumed by the UE is defined as an initial active DL/UL BWP.

Physical Channel and General Signal Transmission

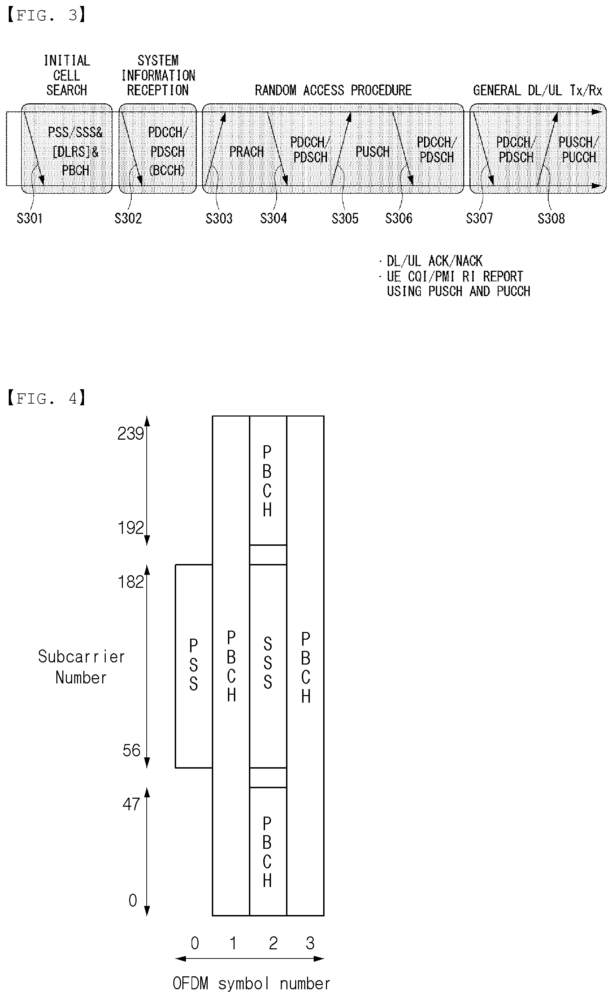

FIG. 3 illustrates physical channels and general signal transmission used in 3GPP systems. In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S301). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information S302.

When there is no radio resource first accessing the eNB or for signal transmission, the UE may perform a Random Access Procedure (RACH) to the eNB S303 to S306. To this end, the UE may transmit a specific sequence to a preamble through a Physical Random Access Channel (PRACH) S303 and S305 and receive a response message (Random Access Response (RAR) message) for the preamble through the PDCCH and a corresponding PDSCH. In the case of a contention based RACH, a Contention Resolution Procedure may be additionally performed S306.

The UE that performs the above procedure may then perform PDCCH/PDSCH reception (S307) and Physical Uplink Shared Channel (PUSCH)/Physical Uplink Control Channel (PUCCH) transmission (S308) as a general uplink/-downlink signal transmission procedure. In particular, the UE may receive Downlink Control Information (DCI) through the PDCCH.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

**Synchronization Signal Block (SSB) Transmission and Related Operation**

FIG. 4 is a diagram illustrating an SSB structure to which a method proposed in the present disclosure is applicable. The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 4, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers.

Polar coding and quadrature phase shift keying (QPSK) are applied to the PBCH. The PBCH consists of data REs and demodulation reference signal (DMRS) REs every OFDM symbol. Three DMRS REs are present per RB, and three data REs are present between the DMRS REs.

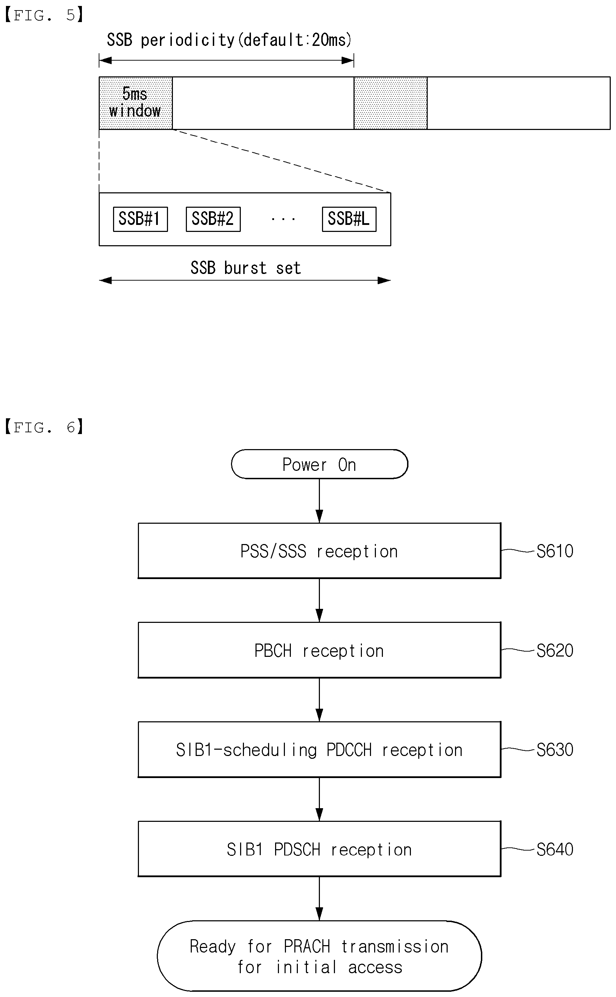

FIG. 5 illustrates SSB transmission to which a method proposed in the present disclosure is applicable.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SSB burst set. The maximum transmission number L of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time location of SSB candidates within the SSB burst set may be defined depending on SCS as follows. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

The contents described above can be combined and applied to methods described below in the present disclosure, or can be supplemented to clarify technical features of the methods described in the present disclosure. Methods described below are merely distinguished for convenience of explanation. Thus, it is obvious that partial configuration of any method can be substituted or combined with partial configuration of another method.

**Technical terms used in the present disclosure**

UE: User Equipment
SSB: Synchronization Signal Block
MIB: Master Information Block
RMSI: Remaining Minimum System Information
FR1: Frequency domain with frequency range of 1.6 GHz or less (e.g., 450 MHz to 6,000 MHz)
FR2: Millimeter wave (mmWave) domain with frequency range of 2.24 GHz or higher (e.g., 24,250 MHz to 52,600 MHz)
BW: Bandwidth
BWP: Bandwidth Part
RNTI: Radio Network Temporary Identifier
CRC: Cyclic Redundancy Check
SIB: System Information Block
SIB1: SIB1 for NR devices = RMSI (Remaining Minimum System Information). It broadcasts information, etc. necessary for cell access of an NR UE.
CORESET (COntrol REsource SET): Time/frequency resource in which an NR UE tries candidate PDCCH decoding
CORESET#0: CORESET for Type0-PDCCH CSS set for NR devices (configured in MIB)
Type0-PDCCH CSS set: a search space set in which an NR UE monitors a set of PDCCH candidates for a DCI format with CRC scrambled by a SI-RNTI
MO: PDCCH Monitoring Occasion for Type0-PDCCH CSS set
SIB1-R: (additional) SIB1 for reduced capability NR devices. It may be limited when it is generated with a separate TB from SIB 1 and is transmitted on a separate PDSCH.

CORESET#0-R: CORESET#0 for reduced capability NR devices

Type0-PDCCH-R CSS set: a search space set in which a redcap UE monitors a set of PDCCH candidates for a DCI format with CRC scrambled by a SI-RNTI

MO-R: PDCCH Monitoring Occasion for Type0-PDCCH CSS set

Cell defining SSB (CD-SSB): SSB including RMSI scheduling information among NR SSBs

Non-cell defining SSB (non-CD-SSB): SSB that has been deployed on NR sync raster, but does not include RMSI scheduling information of a corresponding cell for measurement. But, the SSB may include information informing a location of cell defining SSB.

SCS: subcarrier spacing

SI-RNTI: System Information Radio-Network Temporary Identifier

Camp on: "Camp on" is the UE state in which the UE stays on a cell and is ready to initiate a potential dedicated service or to receive an ongoing broadcast service.

TB: Transport Block

RSA (Redcap standalone): Cell supporting only redcap device or service

SIB1(-R)-PDSCH: PDSCH transmitting SIB1(-R)

SIB1(-R)-DCI: DCI scheduling SIB1(-R)-PDSCH. DCI format 1_0 with CRC scrambled by SI-RNTI.

SIB1(-R)-PDCCH: PDCCH transmitting SIB1(-R)-DCI

FDRA: Frequency Domain Resource Allocation

TDRA: Time Domain Resource Allocation

RA: Random Access

MSGA: preamble and payload transmissions of the random access procedure for 2-step RA type.

MSGB: response to MSGA in the 2-step random access procedure. MSGB may consist of response(s) for contention resolution, fallback indication(s), and backoff indication.

RO-N: RACH Occasion (RO) for normal UE 4-step RACH and 2-step RACH (if configured)

RO-N1, RO-N2: If separate RO is configured for normal UE 2-step RACH, it is divided into RO-N1 (4-step) and RO-N2 (2-step).

RO-R: RACH Occasion (RO) separately configured from RO-N for redcap UE 4-step RACH and 2-step RACH(if configured)

RO-R1, RO-R2: If separate RO is configured for redcap UE 2-step RACH, it is divided into RO-R1 (4-step) and RO-R2 (2-step).

PG-R: MsgA-Preambles Group for redcap UEs

RAR: Random Access Response

RAR window: the time window to monitor RA response(s)

FH: Frequency Hopping

iBWP: initial BWP

iBWP-DL(-UL): initial DL(UL) BWP

iBWP-DL(-UL)-R: (separate) initial DL(UL) BWP for RedCap

CS: Cyclic shift

NB: Narrowband

TO: Traffic Offloading

mMTC; massive Machine Type Communications

eMBB: enhanced Mobile Broadband Communication

URLLC: Ultra-Reliable and Low Latency Communication

RedCap: Reduced Capability

eRedCap: enhanced RedCap

FDD: Frequency Division Duplex

HD-FDD: Half-Duplex-FDD

DRX: Discontinuous Reception

RRC: Radio Resource Control

RRM: Radio Resource Management

IWSN: Industrial Wireless Sensor Network

LPWA: Low Power Wide Area

RB: Resource Block

CCE: Control Channel Element

AL: Aggregation Level

PRG: Physical Resource-block Group

DFT-s-OFDM: DFT-spread OFDM

PBCH: Physical Broadcast Channel

A-PBCH: Additional PBCH
BD: blind detection
EPRE: Energy Per RE
SNR: Signal-to-Noise Ratio
TDM: Time Division Multiplexing
DMRS: DeModulation Reference Signal
TDD: Time Division Duplex

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases.

Features such as enhanced low latency, high reliability, massive connection, etc. of the 5G wireless communication system can be applied to use cases (hereinafter, NB use cases) that have been previously supported in narrowband (NB), as follows.

[Examples of narrowband based use cases (NB use cases)]

i) Railway mobile communication
ii) Utility/infrastructure network
iii) Mobile communication for public safety

These NB use cases have been previously supported at a bandwidth of about 3 MHz in a frequency band of less than 1 GHz using the previous generation wireless communication system. In the same manner, when the 5G wireless communication system intends to support the NB use cases, the NB use cases may be supported, for example, at the similar frequency bandwidth (about 3 MHz and below 5 MHz) in the same frequency band (below 1 GHz). However, since a minimum channel BW supported by the current 5G NR standard is 5 MHz, a channel bandwidth of less than 5 MHz shall first be supported.

[Example of 5G NR frequency band for NB use case support (TS38.101-1)]

NB use cases can be supported in the following NR operating frequency band defined in NR standard TS38.101-1.

[Table 5]

| NR operating band | Uplink (UL) operating band BS receive/UE transmit $F_{UL\_low}$ - $F_{UL\_high}$ | Downlink (DL) operating band BS transmit/UE receive $F_{DL\_low}$ - $F_{DL\_high}$ | Duplex Mode |
|---|---|---|---|
| n8 | 880 MHz - 915 MHz | 925 MHz - 960 MHz | FDD |
| n26 | 814 MHz - 849 MHz | 859 MHz - 894 MHz | FDD |
| n28 | 703 MHz - 748 MHz | 758 MHz - 803 MHz | FDD |
| n100 | 874.4 MHz - 880 MHz | 919.4 MHz - 925 MHz | FDD |

Table 5 shows UL/DL operating band defined per NR operating band in Frequency Range1 FR1.

[Example of definition of channel BW of less than 5 MHz for NB use case support]

Table 6 shows an example of the maximum number of configurable RBs ($N_{RB}$) for each UE channel BW. According to Table 6, in order to support the NB use cases based on 5G NR, 3 MHz UE channel BW is defined and the maximum number of configurable RBs ($N_{RB}$) in the 3 MHz UE channel BW is defined to 15, and in this case, a resource utilization ratio (or RU) (%) is defined.

[Table 6]

| UE channel BW | **3 MHz** | 5 MHz | 10 MHz | 15 MHz | 20 MHz | 25 MHz | 30 MHz | 40 MHz | 50 MHz |
|---|---|---|---|---|---|---|---|---|---|
| NRB | **15** | 25 | 52 | 79 | 106 | 133 | 160 | 216 | 270 |
| RU | **0.9** | 0.9 | 0.936 | 0.948 | 0.954 | 0.958 | 0.96 | 0.972 | 0.972 |

Further, for newly defined 3 MHz UE channel BW, considering interference between contiguous channels and a resource utilization ratio, other NRB values shown in Table 7 below can be defined and used.

[Table 7]

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| 15 | 12 | 13 | 14 | 15 | 16 |
| RU (%) | 0.72 | 0.78 | 0.84 | 0.9 | 0.96 |

For example, the channel BW/NRB may be applied for both DL and UL as the same value. For example, the channel BW/$N_{RB}$ may be configured/supported separately/independently for DL and UL. A method according to the second example may be applied to the following situation. The method can be used to when intending to apply conditions where additional DFT precoding is applicable only to the UL when determining the NRB values, while supporting maximum channel BW/$N_{RB}$ values in both DL and UL considering interference between contiguous channels and the resource utilization ratio.

FIG. 6 is a flow chart illustrating reception of DL signals/channels in an initial access procedure to which a method according to an embodiment of the present disclosure is applicable. Referring to FIG. 6, a 5G NR UE may receive DL signals/channels in order of S610 to S640 in an initial access procedure. The specific details for the initial access procedure are the same as those described in FIGS. 3 to 5, so duplicate descriptions will be omitted.

The existing NR UE may receive CORESET#0 information via a master information block (MIB) transmitted on a PBCH and receive initial DL signals/channels through CORESET#0 frequency band in the initial access procedure. However, considering the channel BWs shown in Tables 6 and 7 and supportable CORESET#0 bandwidth in the NR standard, the operation according to the above-described conventional method may be inefficient.

The present disclosure proposes methods for effectively supporting an NR DL control channel for initial access in a narrowband, in consideration of such situations.

In the present disclosure, narrowband and NB can be interpreted/applied interchangeably. Further, channel BW, NRB, allowed/supported transmission BW, (punctured/non-punctured) PBCH BW, and max transmission BW can be interpreted/applied interchangeably.

In the present disclosure, broadcast signaling further includes a signaling method using PBCH payload generated in the PHY layer, PBCH scrambling sequence, and PBCH DMRS sequence initialization information, in addition to system information including SIB1 and MIB.

In the present disclosure, the broadcast signaling may comprise defining or interpreting differently the existing bit/field. For example, if some of signaling methods based on MIB used for the existing broadcast signaling, PBCH payload generated in the PHY layer in addition to the MIB, and PBCH scrambling sequence and PBCH DMRS sequence initialization information no longer need to be signaled, the broadcast signaling may comprise newly defining and signaling the corresponding bit/field. For example, the broadcast signaling may comprise using subCarrierSpacingCommon in MIB (1 bit, {15 kHz, 30 kHz}) for other 1-bit broadcast signaling purposes usage in a narrowband frequency band supporting only 15 kHz SCS. If PBCH/SIB1/SIB1-scheduling DCI transmission for a new UE is possible without affecting the legacy UE through a frequency band, a dedicated spectrum, a dedicated sync raster, etc., the above-described broadcast signaling may comprise a signaling method performed by newly defining and differently interpreting the bit/field that has been used for broadcast signaling purpose for the existing legacy UE.

[Method for transmitting a PBCH in a narrow band]

In order to support NR DL broadcast signal reception in a narrowband with 5 MHz bandwidth, a subset of PBCH transmission resource blocks (RBs) may be transmitted. In the present disclosure, 'transmitting a subset of PBCH transmission RBs' may mean 'PBCH is transmitted based on a subset of RBs assigned to the PBCH.'

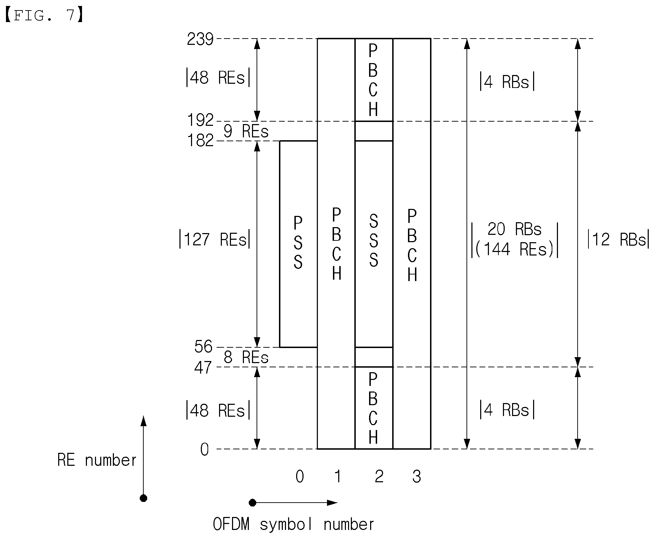

In the present disclosure, the PBCH transmission RBs may refer to RBs related to the PBCH or RBs allocated to the PBCH in a time-frequency structure of SS/PBCH (e.g., see FIG. 7). In the present disclosure, a 'PBCH transmission RB subset' may mean a subset of RBs related to the PBCH or a subset of RBs allocated to the PBCH.

In the present disclosure, PSS/SSS transmission RBs may refer to RBs related to the PSS/SSS or RBs allocated to the PSS/SSS in the time-frequency structure of SS/PBCH (e.g., see FIG. 7).

In the present disclosure, the resource block (RB) may be interpreted/replaced with a physical resource block (PRB) or a common resource block (CRB).

FIG. 7 illustrates an example of a time-frequency structure of SSB according to an embodiment of the present disclosure. For example, the time-frequency structure of SSB may be defined in NR standard.

Specifically, FIG. 7 illustrates the number of REs/the number of RBs in the time-frequency structure of FIG. 4 is added for each domain. Referring to FIG. 7, a frequency domain (bandwidth) for PSS and SSS consists of 127 resource elements (REs). A frequency domain (bandwidth) for PBCH consists of 20 resource blocks (RBs) (= 144 REs) or 4 RBs (= 48 REs).

For example, a base station may need to exclude or puncture at least five PBCH transmission RBs from PBCH consisting of 20 PRBs and transmit remaining RBs, in order to support PBCH transmission/reception in 3 MHz channel BW stipulated as NRB = 15 PRBs. That is, the base station may transmit a subset of up to 15 PBCH transmission RBs among a total of 20 PBCH transmission RBs. Further, all the PSS/SSS transmission RBs can be transmitted for the same level of synchronization and measurement performance as the existing NR UE. In this case, the minimum PBCH transmission RBs may be 12 RBs including PSS/SSS.

In the present disclosure, the "punctured" PBCH or the PBCH transmission RB subset means an actual transmitted PBCH after the puncturing application when a subset of PBCH transmission RBs is punctured and transmitted. Therefore, the 'punctured PBCH' and the 'PBCH transmission RB subset' can be interpreted/applied interchangeably.

In 3 MHz channel BW stipulated as NRB = 15 PRBs as in the above example, the BS/UE may configure the PBCH transmission RB subset using 12 PRBs to 15 PRBs. Methods of configuring a PBCH transmission RB subset respectively using 12 PRBs and 15 PRBs are described in detail below.

[Example #P1]

A method of configuring a PBCH transmission RB subset using 12 PRBs including PSS/SSS may be considered.

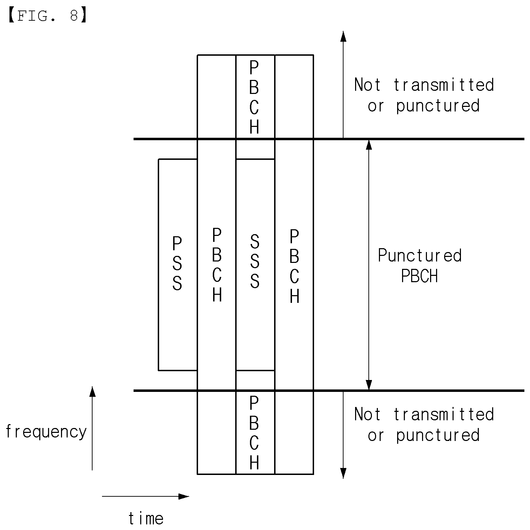

The example #P1 is a case in which a PBCH transmission RB subset is configured using only 12 PRBs including PSS/SSS. That is, a PBCH transmission RB subset may be configured using a minimum RB subset including all the PSS/SSS (e.g., FIG. 8). The example #P1 may be efficient when it intends to apply to all of various narrowband channel BWs by defining one punctured PBCH or the PBCH transmission RB subset.

FIG. 8 illustrates an example of a frequency resource domain for PBCH transmission/reception according to an embodiment of the present disclosure. Specifically, FIG. 8 illustrates an example of a PBCH transmission RB subset based on the example #P1.

[Example #P2]

A method of configuring a PBCH transmission RB subset using 15 PRBs including PSS/SSS may be considered.

The example #P2 is a case in which a PBCH transmission RB subset is configured using 15 PRBs including PSS/SSS.

A PBCH transmission RB subset (i.e., detailed configuration of 15 PRBs) according to an embodiment of the present disclosure may be determined based on one of the following configurations #P2-1 to #P2-4.

Configuration #P2-1: Center 12 PRB (for PSS/SSS) + lower 3 PRB
Configuration #P2-2: Center 12 PRB (for PSS/SSS) + higher 3 PRB
Configuration #P2-3: Center 12 PRB (for PSS/SSS) + lower 2 PRB + higher 1 PRB
Configuration #P2-4: Center 12 PRB (for PSS/SSS) + higher 2 PRB + lower 1 PRB

Due to characteristics of PBCH RE mapping, preferentially transmitting lower RBs of PBCH transmission RBs may be slightly advantageous in terms of performance. Therefore, if other conditions are the same, the Configuration #P2-1 rather than the Configuration #P2-2 may have an advantage in terms of PBCH reception performance. In addition, the Configuration #P2-3 rather than the Configuration #P2-4 may have an advantage in terms of PBCH reception performance.

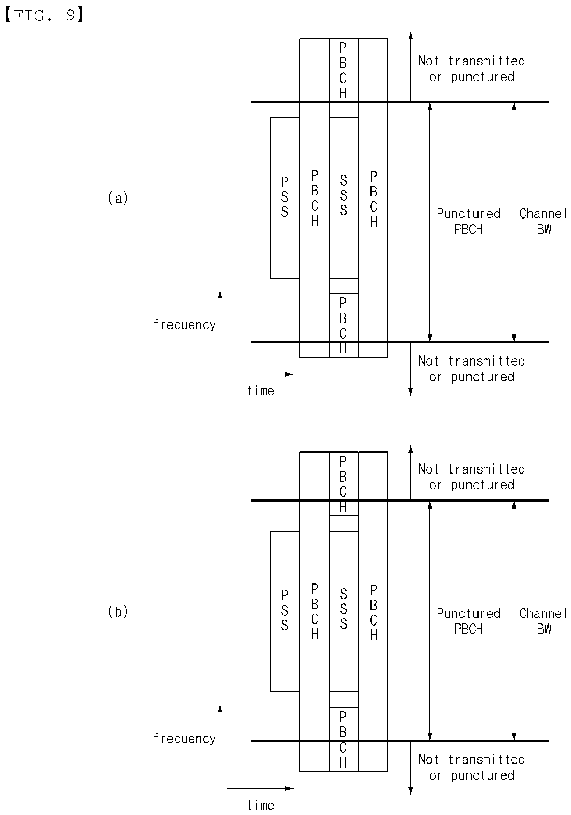

The Configurations #P2-1 and P2-2 may be affected in terms of sync performance and measurement performance in a situation, in which there is interference from a contiguous channel/frequency band because the PSS/SSS is exposed to a band edge. If the influence of the interference is expected, the Configuration #P2-3 or the Configuration #2-4 may be considered. In the Configuration #P2-3 or the Configuration #2-4, the PSS/SSS is arranged further inside the channel BW, and thus this method may be to protect the PSS/SSS from the interference from the contiguous channel/-frequency band. This is described below with reference to FIG. 9.

FIG. 9 illustrates an example of a frequency resource domain for PBCH transmission/reception according to another embodiment of the present disclosure.

(a) of FIG. 9 illustrates the Configuration #P2-1. In this case, the PBCH transmission RB subset may include center 12 PRB (for PSS/SSS) + lower 3 PRB.

(b) of FIG. 9 illustrates the Configuration #P2-3. In this case, the PBCH transmission RB subset may include center 12 PRB (for PSS/SSS) + lower 2 PRB + higher 1 PRB.

**NR PDCCH transmission method**

The following two narrowband scenarios are considered as important in the 3GPP Rel-18 standardization.

[Narrowband Scenario #1]

General narrowband scenario

Scenario #1 is expected to be supported in at least n8/n26/n28 among the NR operating bands defined in the TS 38.101-1. At this time, n100 may also be included in the bands that support the narrowband scenario.

RF channel BW = 3 MHz, nRB = 15 PRBs (with 15 kHz SCS), 12-PRB PBCH, finer sync raster.

In order to solve the problem where it is impossible to limit an SSB to always fall within narrowband channel BW using the conventional sync raster point spacing of 1.2 MHz, a finer sync raster dedicated to narrowband has been introduced. The frequency positions based on the finer sync raster may be determined based on the Equation 3 below.

[Equation 3]

$$N * 600\ kHz + M * 50\ kHz + A\ kHz,\ N \in \{1{:}4998\},\ M \in \{1,3,5\},\ A=300$$

The finer sync raster is defined to be spaced as far as possible from the conventional 1.2 MHz sync raster in the frequency domain. Specifically, frequency positions based on the finer sync raster may be determined at a spacing of 600 kHz. In other words, three frequency positions (M=1, 3, 5) based on the finer sync raster may be determined/defined at a spacing of 600 kHz.

[Narrowband Scenario #2]

GSM to NR migration scenario (a scenario in which GSM is gradually converted to NR by stepwise expansion of NR transmission BW while GSM is currently in use).

- Scenario #2 is expected to be supported in at least n100 among the NR operating bands defined in the TS 38.101-1.
- For 3 MHz and 5 MHz channel BW, the following two sub-scenarios are being considered.

Narrowband Scenario #2-1: RF channel BW = 3 MHz, NR transmission BW = 12 PRBs (with 15 kHz SCS), 12-PRB PBCH, additional sync raster for 3 MHz.

Narrowband Scenario #2-2: RF channel BW = 5 MHz, NR transmission BW = 20 PRBs (with 15 kHz SCS), 20-PRB PBCH, additional sync raster for 5 MHz.

For example, NR transmission BW may be a concept distinct from nRB. When some RBs within the nRB, rather than the entire nRB, are used for actual NR transmission, NR transmission BW may be used for the purpose of distinguishing the RBs from nRB.

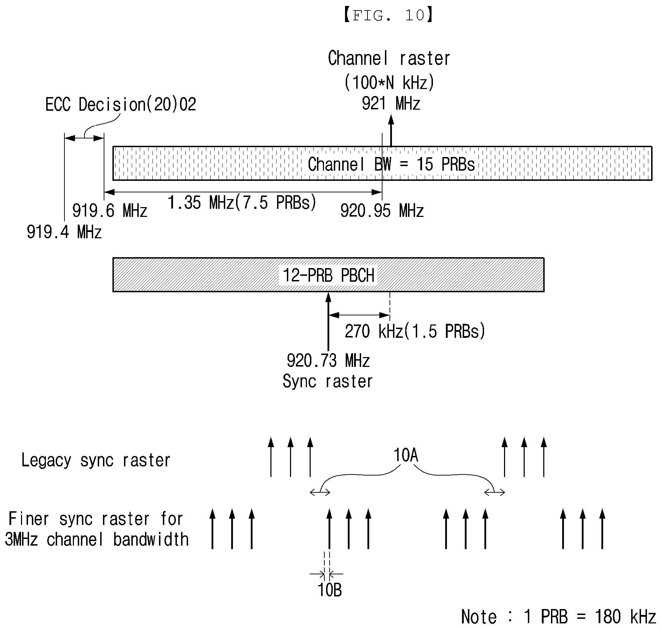

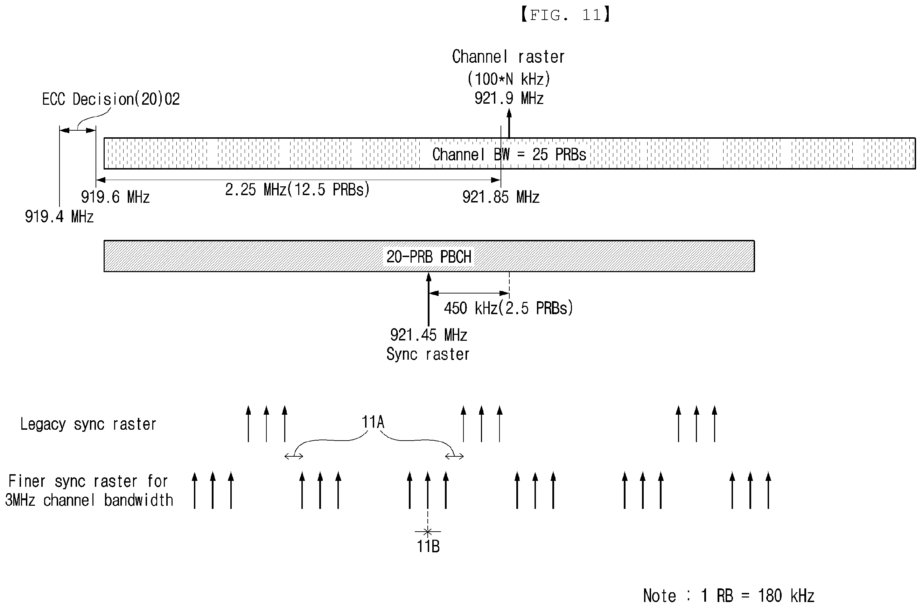

In Narrowband Scenario #2, due to the characteristics of the scenario, it may be necessary to dispose 12-PRB PBCH or 20-PRB PBCH as close to the narrowband edge as possible. In the case of n100, an additional sync raster may be supported at a position considering the adjacent channel environment. Hereinafter, the additional sync raster for n100 will be described with reference to FIGS. 10 and 11.

FIG. 10 illustrates an example of a sync raster according to an embodiment of the present disclosure.

Referring to FIG. 10, the frequency position related to Scenario #2-1 may be 920.73 MHz. An additional sync raster may be supported at the corresponding frequency position. 10A may indicate a minimum spacing (e.g., 100 kHz) between a legacy sync raster and a finer sync raster. 10B may indicate a minimum spacing (e.g., 20 kHz) between a sync raster based on a 12 PRB PBCH and a channel raster (15 PRB) defined/determined in units of 100 kHz. In other words, 10B may indicate a minimum spacing that enables the sync raster to be disposed according to a subcarrier spacing (SCS) (e.g., 15 kHz) in relation to the channel raster.

FIG. 11 illustrates another example of a sync raster according to an embodiment of the present disclosure.

Referring to FIG. 11, the frequency position related to Scenario #2-2 may be 921.45 MHz. An additional sync raster may be supported at the corresponding frequency position. 11A may indicate a minimum spacing (e.g., 100 kHz) between a legacy sync raster and a finer sync raster. 11B may indicate a minimum spacing (e.g., 0 kHz) between a sync raster based on a 20 PRB PBCH and a channel raster (25 PRB) defined/determined in units of 100 kHz.

Also, as mentioned above, the narrowband channel BW may be smaller than the minimum bandwidth of the conventional CORESET #0 designed in consideration of general bandwidth. In this case, the CORESET #0 bandwidth may exceed the narrowband channel BW. For example, since the CORESET #0 bandwidth supported in the current NR standard is 24 PRBs (4.32 MHz) based on 15 kHz SCS, the CORESET #0 bandwidth may exceed the narrowband channel BWs shown in Tables 6 and 7. In order to support such a scenario, the following two methods have been proposed.

[Method #1] Method of Using New CORESET #0

A new CORESET #0 having small bandwidth included in the narrowband channel BW may be defined. A PDCCH may be transmitted based on the newly defined CORESET #0.

[Example #1 of Method #1] In order to support 3 MHz channel bandwidth, 15-PRB transmission BW, or 12-PRB transmission BW, the following CORESET #0 may be defined/supported. A CORESET #0 with a bandwidth of 12 PRBs, which is smaller than the conventional minimum bandwidth of 24 PRBs, may be newly defined. In other words, the frequency domain size $N_{RB}^{CORESET}$ of the CORESET #0 may be 12.

[Example #2 of Method #1] In order to support 5 MHz channel bandwidth and 20-PRB transmission BW, the following CORESET #0 may be defined/supported. CORESET #0 with a bandwidth of 18 PRBs, which is smaller than the conventional minimum bandwidth of 24 PRBs, may be newly defined. In other words, the frequency domain size $N_{RB}^{CORESET}$ of the CORESET #0 may be 18.

[Method #2] Method of reusing conventional CORESET #0

While the conventional CORESET #0 is reused, a PDCCH may be transmitted by excluding a resource region where RE mapping is performed beyond a narrowband channel BW. For example, puncturing (truncation) may be performed on RBs exceeding the narrowband channel BW (e.g., 3 MHz, 15 PRB). As a specific example, when the frequency domain size $N_{RB}^{CORESET}$ is 24, CORESET #0 may be obtained by puncturing 9 highest numbered RBs among the 24 RBs.

For example, a base station may perform PDCCH RE mapping on the entire conventional CORESET #0 bandwidth according to the conventional method specified in the TS 38.213. The base station may transmit a PDCCH based on PDCCH transmission REs/RBs/REGs/REG bundles/CCEs included in the narrowband channel BW. At this time, the meaning of "included" may indicate the meaning of "partially included" or "entirely included."

[Example #1 of Method #2] In order to support 3 MHz channel bandwidth, the 24-PRB CORESET #0 defined in the TS 38.213 Table 13-1 may be reused. In this case, PDCCH transmission REs/RBs/REGs/REG bundles/CCEs mapped to REs outside the transmission BW (12 PRB or 15 PRB) may not be transmitted through puncturing/truncation, or even if transmitted, reception thereof by a UE may not be expected/required. For example, the highest/lowest numbered 12 RBs (or highest/lowest numbered 9 RBs) among 24 PRBs may be punctured.

[Example #2 of Method #2] In order to support 5 MHz channel bandwidth and 20-PRB NR transmission BW, 24-PRB CORESET #0 defined in the TS 38.213 Table 13-1 may be reused. In this case, PDCCH transmission REs/RBs/REGs/REG bundles/CCEs mapped to REs outside transmission BW (20 PRB) may not be transmitted through puncturing/truncation, or even if transmitted, reception thereof by a UE may not be expected/required. For example, the highest/lowest numbered 4 RBs among 24-PRBs may be punctured.

The position of CORESET #0 may be defined/determined relative to an SSB. Specifically, the relative position of CORESET #0 may be determined by an offset parameter and a $k_{SSB}$ parameter as shown in Table 8. In other words, the spacing between CORESET #0 and the SSB may be determined based on the offset parameter (RB offset) and the $k_{SSB}$ parameter (subcarrier offset).

[Table 8]

> For operation with shared spectrum channel access in FR2-2 and for operation without shared spectrum channel access, a UE assumes that the offset in Tables 13-1 through 13-10A is defined with respect to the SCS of the CORESET for Type0-PDCCH CSS set from the smallest RB index of the CORESET for Type0-PDCCH CSS set to the smallest RB index of the common RB overlapping with the first RB of the corresponding SS/PBCH block. The SCS of the CORESET for Type0-PDCCH CSS set is provided by *subCarrierSpacingCommon* for FR1 and FR2-1 and same as the SCS of the corresponding SS/PBCH block for FR2-2. In Tables 13-7, 13-8, and 13-10, $k_{SSB}$ is defined in [4, TS 38.211].
>
> (...)
>
> "The quantity $k_{SSB}$ is the subcarrier offset from subcarrier 0 in common resource block $N_{CRB}^{SSB}$ to subcarrier 0 of the SS/PBCH block, where $N_{CRB}^{SSB}$ is obtained from the higher-layer parameter *offsetToPointA.*"

$k_{SSB}$ may be indicated by the ssb-SubcarrierOffset parameter in the system information block (e.g., MIB). For example, $k_{SSB}$ may be indicated by an integer from 0 to 15. If the ssb-SubcarrierOffset parameter is not set, $k_{SSB}$ may be derived from a frequency difference between the SS/PBCH block and point A.

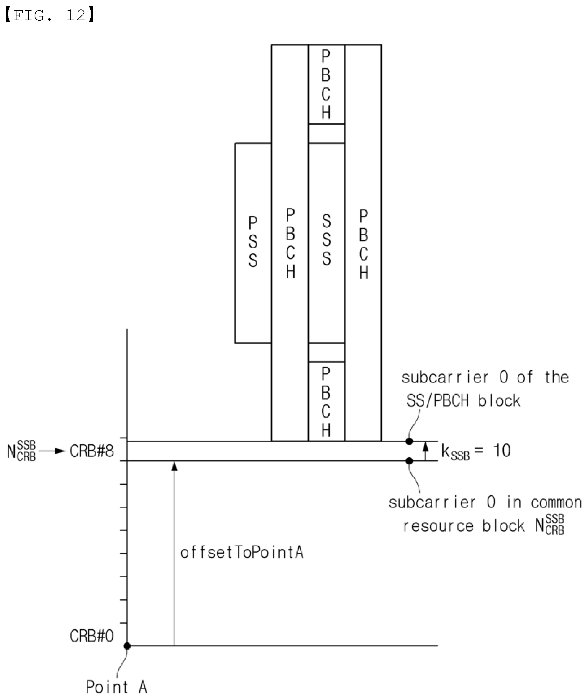

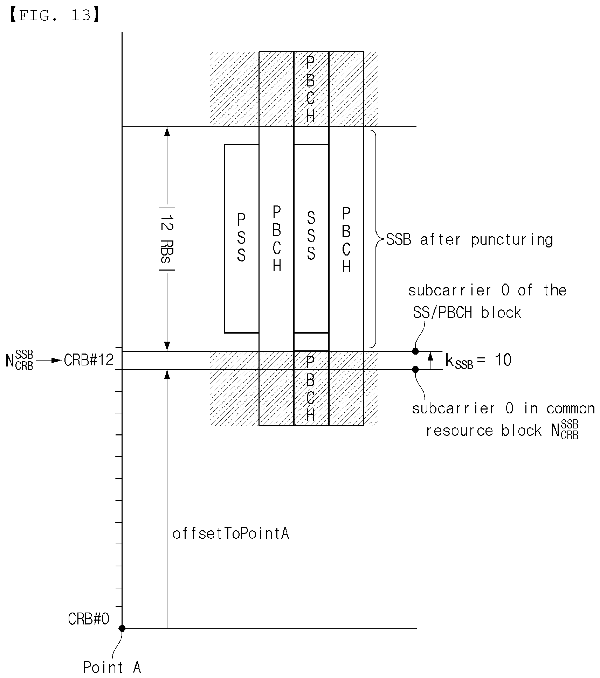

The $k_{SSB}$ parameter may be defined based on one of the embodiments described later (e.g., Method #A or Method #B). For example, the $k_{SSB}$ parameter may be defined based on the SS/PBCH block in the same manner as in the existing method (Method #A). For example, the $k_{SSB}$ parameter may be defined based on the SS/PBCH block after puncturing (Method #B). Hereinafter, point A related to the $k_{SSB}$ parameter will be described with reference to FIGS. 12 and 13.

FIG. 12 illustrates point A according to the existing method. Specifically, FIG. 12 illustrates offsetToPointA. Referring to FIG. 12, offsetToPointA represents a frequency offset between point A and the lowest subcarrier (subcarrier 0) of the lowest resource block (CRB #8) that overlaps with the SS/PBCH block. $k_{SSB}$ represents a subcarrier offset between the lowest subcarrier number (subcarrier 0) of the SS/PBCH block and subcarrier 0 in common resource block ( $N_{CRB}^{SSB}$ ), where the common resource block ( $N_{CRB}^{SSB}$ ) is obtained from offsetToPointA. That is, the common resource block ( $N_{CRB}^{SSB}$ ) may be a lowest resource block that overlaps with the SS/PBCH block based on offsetToPointA.

FIG. 13 illustrates point A according to an embodiment of the present disclosure. Descriptions overlapping with those given with reference to FIG. 12 are omitted. Referring to FIG. 13, the SS/PBCH block after puncturing may be composed of 12 resource blocks. According to an embodiment of the present disclosure, offsetToPoint A represents a frequency offset between point A and the lowest numbered subcarrier (subcarrier 0) of the lowest numbered resource block ( $N_{CRB}^{SSB}$ , CRB #12) overlapping with the SS/PBCH block after puncturing.

Hereinafter, embodiments for criteria related to the relative position of CORESET #0 (e.g., the offset in Table 8) in Method #A to Method #C will be described.

[Method #A]

Even if the PBCH and PDCCH are transmitted in a narrowband based on the methods proposed in the present disclosure, a relative positional relationship between the SSB and CORESET #0 and their signaling method may follow the exiting standards. In other words, "the smallest RB index of the CORESET for Type0-PDCCH CSS set" and "the first RB of the corresponding SS/PBCH block" described in the above standards may be defined based on the SSB(PBCH)/CORESET #0 BW before puncturing.

Specifically, even if actual transmission/reception is not performed due to subset transmission for narrowband transmission, puncturing, and the like, the offset in Table 8 may be defined based on the entire PBCH BW (before being punctured) and the entire CORESET #0 BW (before being punctured).

[Method #B]

"The first RB of the corresponding SS/PBCH block" may be defined based on the PBCH transmission RB that is actually transmitted/received. The actually transmitted/received PBCH transmission RB may mean an RB after puncturing (or subset determination).

In other words, the offset in Table 8 may be defined based on the punctured PBCH (i.e., SS/PBCH block after puncturing).

For example, in the case of a 12-RB PBCH, "the first RB of the corresponding SS/PBCH block" may refer to one of the following items i) through iv).

i)"the first RB of the corresponding "(actually) transmitted" SS/PBCH block"

ii)"the first RB of the corresponding SS/PBCH block after puncturing"

iii) "the first RB of the corresponding "non-punctured" SS/PBCH block",

iv) "the subcarrier number 48 of the corresponding SS/PBCH block"

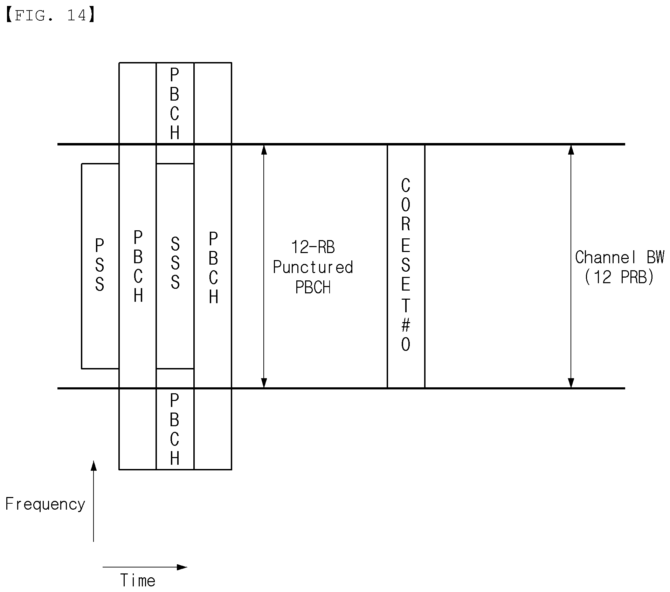

The CORESET#0 will be described below with reference to FIG. 14.

FIG. 14 illustrates CORESET #0 according to one embodiment of the present disclosure. Referring to FIG. 14, when a 12-RB PBCH is supported in a narrowband having a transmission BW of 12 PRBs, CORESET#0 having a size of 12 PRBs may be applied.

According to the definition of Method #B, the RB offset value (the offset in Table 8) may be defined as follows.

For example, the RB offset value may be 0. In other words, the smallest RB index of a CRB overlapping with the smallest RB index (index of the first RB) of a punctured SSB may be aligned with the smallest RB index of CORESET #0.

For example, when the punctured PBCH occupies an entire maximum transmission BW, or when CORESET#0 is transmitted without puncturing within the maximum transmission BW and/or a punctured PBCH BW, an RB offset value may be defined as follows. The RB offset value may be defined as a value such that the "highest" RB index of a CRB overlapping with the smallest RB index of a punctured SSB is aligned with the smallest RB index of CORESET #0.

In order to support the example of FIG. 14 through Method #A, the RB offset value may be defined as a negative (-) value. Specifically, when the RB offset value is -4, the smallest RB index of a CRB overlapping with the smallest RB index of the punctured SSB may be aligned with the smallest RB index of CORESET #0.

[Method #C]

The offset described above may be defined based on a smallest RB index according to a criterion different from that for a non-punctured PBCH (Method #A) or a punctured PBCH (Method #B). The offset may be defined based on the smallest RB index among RBs (or CRBs) defined within the maximum transmission BW or RBs (or CRBs) in which DL reception is possible. At this time, according to an offset value of 0, the smallest RB index among RBs (or CRBs) defined within the maximum transmission BW or RBs (or CRBs) in which DL reception is possible may be aligned with the CORESET #0 smallest RB index.

Parameters for supporting the above methods (Method #A/B/C) may be indicated/configured by broadcast signaling (e.g., an MIB). These parameters may include all or part of the parameters, including an applied method among the methods and an offset parameter.

According to one embodiment, the highest RB index of CORESET #0 may be determined without separate signaling. For example, the highest RB index of CORESET #0 may be determined based on the biggest RB index (highest RB index) of a CRB that does not exceed the maximum transmission BW. As another example, the highest RB index of CORESET #0 may be determined based on the biggest RB index (highest RB index) of a CRB that does not exceed the punctured PBCH BW.

At this time, the CORESET#0 highest RB index may be determined in units of RBs/REGs/REG bundles/CCEs. When the CORESET#0 highest RB index is configured in units of REG bundles/CCEs, the total number of RBs of CORESET #0 may be limited to a multiple of the number of RBs constituting a REG bundle/CCE.

According to one embodiment, the CORESET #0 highest RB index may be configured through broadcast signaling. For example, the base station may indicate/configure one value among supportable CORESET #0 BW values predefined in the standard to the UE based on broadcast signaling. The CORESET #0 BW supported in a narrowband may have a BWP size that a legacy UE does not support, but a new UE supporting narrowband operation may be configured/implemented to mandatorily support the CORESET #0 BW size supported in the narrowband.

Hereinafter, methods for supporting PDCCH transmission in narrowband scenarios will be described in consideration of the above narrowband scenarios (Scenario #1/#2/#2-1/#2-2) and Method #1 and Method #2 related to a CORESET #0.

The position of CORESET #0 in the frequency domain is determined by the offset parameter. The value of the offset parameter may vary according to the offset definition method #A/method #B/method #C.

The methods described below will focus on offset definition method #A (the legacy method, based on the PBCH BW before puncturing and the CORESET #0 BW before being punctured). This is only for the convenience of description and is not intended to limit the application scope of the embodiments described later to method #A. The proposed methods below may be applied in the same manner even in the case of offset definition method #B/method #C, with only a difference in the offset value.

[Method for supporting punctured 15-PRB CORESET #0]

In narrowband scenarios except for the narrowband scenario #2-1, 15-PRB CORESET #0 may be supported.

The 15-PRB CORESET #0 may be supported by reusing the conventional 24-PRB CORESET #0. In other words, after performing PDCCH RE mapping based on the 24-PRB CORESET #0, a PDCCH may be transmitted based on REs/RBs/REGs/REG bundles/CCEs within the 15-PRB CORESET #0 frequency domain. Due to a bandwidth difference between the 24-PRB CORESET #0 before puncturing and the 15-PRB CORESET #0, an offset may be configured/defined/applied using a value in the range of 5 to -2 in all supportable scenarios. If the performance difference according to the offset value is not significant, a portion of values within the range above (e.g., offset parameter value 0) may be set as the offset value of the CORESET #0 Table. When a plurality of offset values are available, a single value may be configured/indicated to a UE based on broadcast signaling of a base station.

[Method for supporting new (non-punctured) 12-PRB CORESET #0]

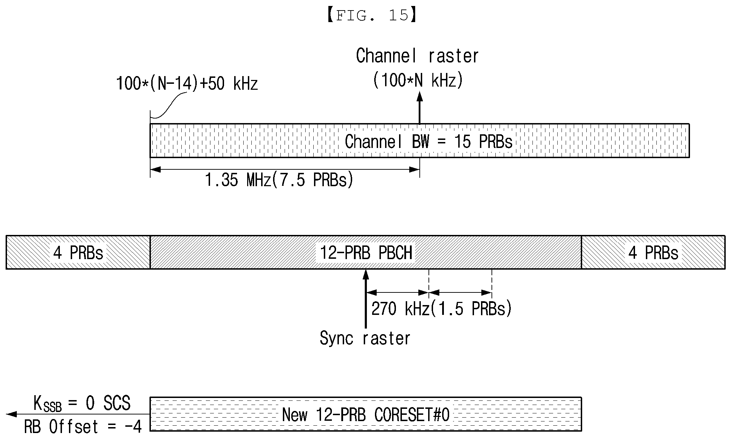

For all of the narrowband scenarios above, 12-PRB CORESET #0 may be supported. At this time, to implement narrowband scenario #2-1, an allocation that aligns the smallest RB index of the 12-PRB CORESET #0 exactly with the smallest RB index of the 12-PRB PBCH may have to be supported. It may be mandatory to support an offset parameter value of -4 and a $k_{SSB}$ value of 0. Similarly, assuming that method #B is employed, it may be mandatory to support an offset parameter value of 0 and a $k_{SSB}$ value of 0. The allocation method above will be described in detail below with reference to FIGS. 15 to 17.

FIG. 15 illustrates one example of a channel raster and a sync raster based on an embodiment of the present disclosure. Referring to FIG. 15, the RB offset from the smallest RB index of the 12-PRB CORESET #0 to the smallest RB index of a CRB overlapping with the first RB of the SSB (PBCH) before puncturing may be -4. In the case of method #B, the RB offset from the smallest RB index of the 12-PRB CORESET #0 to the smallest RB index of the CRB overlapping with the first RB of the SSB (PBCH) after puncturing may be 0. At this time, the $k_{SSB}$ value may be 0.

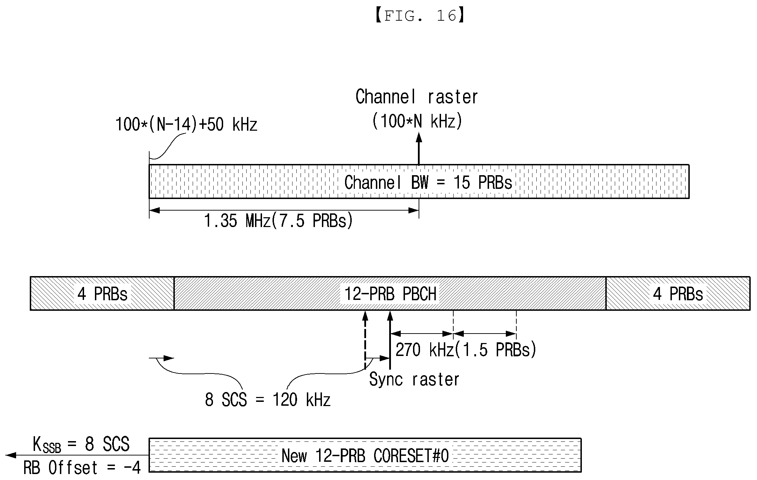

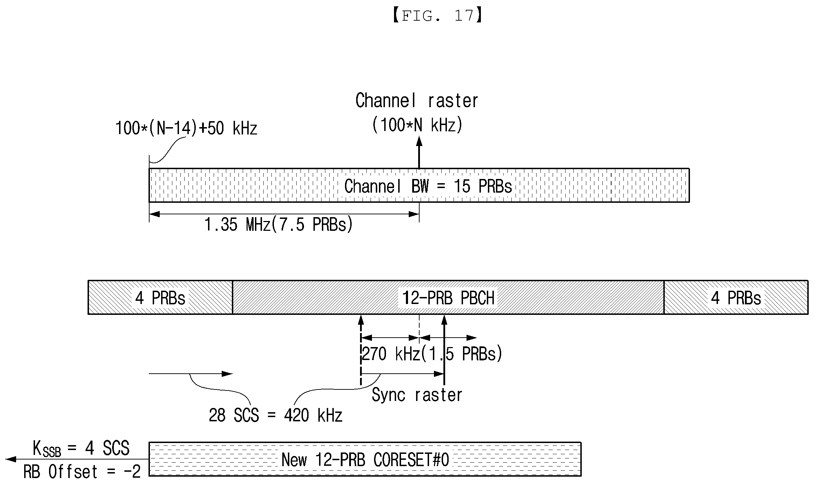

FIG. 16 illustrates another example of a channel raster and a sync raster based on an embodiment of the present disclosure. FIG. 17 illustrates yet another example of a channel raster and a sync raster based on an embodiment of the present disclosure.

Considering relationships among all of finer sync rasters (e.g., frequency positions based on Equation 3) and the 100 kHz channel raster in narrowband scenario #1, the following offset parameter value and $k_{SSB}$ value may additionally/selectively be supported to provide network flexibility to a base station.

Referring to FIG. 16, an offset parameter value of -4 and a $k_{SSB}$ value of 8 may be supported. Assuming that method #B is employed, an offset parameter value of 0 and a $k_{SSB}$ value of 8 may be supported.

Referring to FIG. 17, an offset parameter value of -2 and a $k_{SSB}$ value of 4 may be supported. Assuming that method #B is employed, an offset parameter value of 2 and a $k_{SSB}$ value of 4 may be supported.

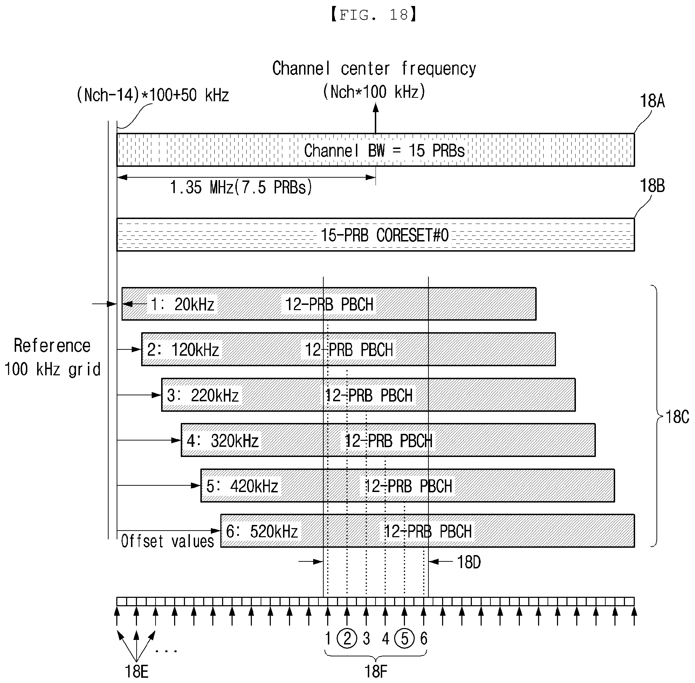

As described above, the relative position between the SSB and CORESET #0 is determined based on the offset parameter and the $k_{SSB}$ parameter. Therefore, a combination of a channel raster and a sync raster supportable for each NR operating band may be limited to cases in which an interval between them is a multiple of a subcarrier spacing. This will be described in detail below with reference to FIGS. 18 to 20.

FIG. 18 illustrates valid offset values among offset values between CORESET #0 and a sync raster based on an embodiment of the present disclosure.

Referring to FIG. 18, 18A represents a channel bandwidth (15 PRBs) having a channel center frequency based on a channel raster of 100 kHz. 18B represents a 15-PRB CORESET#0. 18C represents 12-PRB PBCHs based on six offset values. Although not shown in the figure, six 12-PRB PBCHs based on offset values of 1 to 6 may be referred to as 18C-1 to 18C-6.

18D represents a valid sync raster range. Specifically, the valid sync raster range may refer to a range from 'channel center frequency - 270 kHz (1.5 PRB)' to 'channel center frequency + 270 kHz (1.5 PRB).'

18E represents potential frequency positions based on the finer sync raster described above.

18F represents indices allowed for the channel bandwidth among indices (1 to 6) of frequency positions of the six 12-PRB PBCHs within the valid sync raster range. Specifically, among the indices 1 to 6, indices at which the interval between the channel center frequency and the frequency position is a multiple of the subcarrier spacing (SCS) (15 kHz) are 2 and 5. This will be described in detail below.

Among the six frequency positions, only two frequency positions based on indices 2 and 5 may be allowed for the channel bandwidth.

In the case of index 2, the offset value is 120 kHz. Since 120 kHz = 0 * (12 SCS * 15 kHz) + 8 * 15 kHz, the RB offset corresponding to the offset value of 120 kHz is 0, and $k_{SSB}$ is 8.

In the case of index 5, the offset value is 420 kHz. Since 420 kHz = 2 * (12 SCS * 15 kHz) + 4 * 15 kHz, the RB offset corresponding to the offset value of 420 kHz is 2, and $k_{SSB}$ is 4.

The remaining four frequency positions (indices 1, 3, 4, 6) are not allowed because their offset values are not multiples of the SCS (15 kHz). In other words, the only offset values that allow the CORESET#0 and the 12-PRB PBCH (12 RB SS/PBCH block) to be disposed at a frequency position based on the SCS are 120 kHz (index 2) and 420 kHz (index 5), and frequency positions based on the other offset values may not be allowed because they are not disposed at frequency positions based on the SCS.

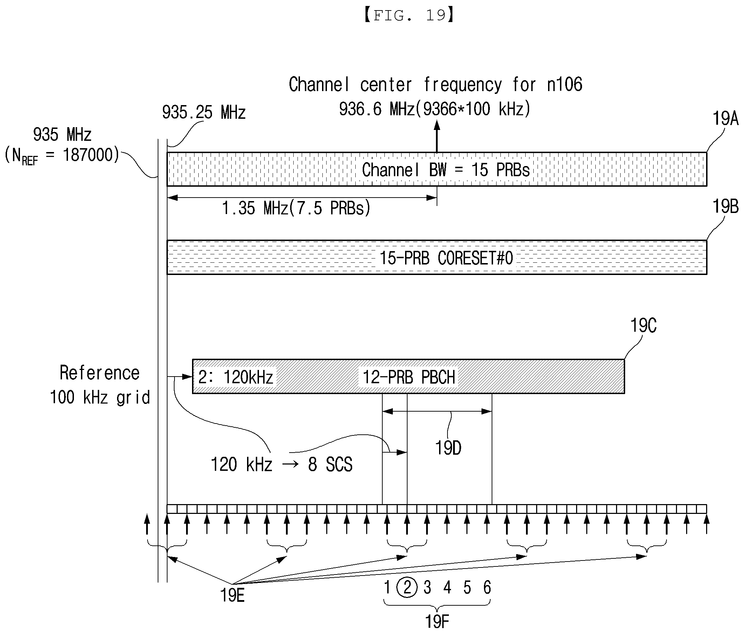

FIG. 19 shows an example of a valid offset value between CORESET #0 and a synchronization raster in a specific frequency band based on an embodiment of the present disclosure.

Referring to FIG. 19, 19A represents channel BW (15 PRBs) having a channel center frequency (936.6 MHz = 9366* 100 kHz) for the operating band n106.

19B represents a 15-PRB CORESET#0. 19C represents a 12-PRB PBCH based on a valid offset value of 120 kHz (= 8 SCS) among the six offset values described above.

19D represents a valid sync raster range.

19E represents frequency positions based on the finer sync raster described above. Referring to Equation 3, the frequency positions may be calculated as follows.

$$N * 600 \text{ kHz} + M * 50 \text{ kHz} + A \text{ kHz}, N \in \{1:4998\}, M \in \{1,3,5\}, A=300$$

[1] N=1558, M=1, 3, 5
[2] N=1559, M=1, 3, 5
[3] N=1560, M=1, 3, 5
[4] N=1561, M=1, 3, 5
[5] N=1562, M=1, 3, 5

19F indicates an index (2) that is allowed for a channel bandwidth having a center frequency of 936.6 MHz, among indices (1 to 3) of frequency positions of three 12-PRB PBCHs within the valid sync raster range.

Specifically, the three frequency positions belonging to 19D may be calculated as shown in the following (1) to (3) according to N = 1560 and M = 1, 3, 5.

(1) 936,350 kHz (936.35 MHz), N = 1560, M = 1 / Interval: 0.25 MHz (250 kHz)
(2) 936,450 kHz (936.45 MHz), N = 1560, M = 3 / Interval: 0.15 MHz (150 kHz)
(3) 936,550 kHz (936.55 MHz), N = 1560, M = 5 / Interval: 0.05 MHz (50 kHz)

Among the three frequency positions, the frequency position at which the interval from the channel center frequency of 936.6 MHz is a multiple of the SCS (15 kHz) is (2) 936.45 kHz.

As described above, for a channel bandwidth having a center frequency of 936.6 MHz in the n106 band, only the frequency position when the offset value is 120 kHz is allowed. In this case, the RB offset is 0, and $k_{SSB}$ is 8.

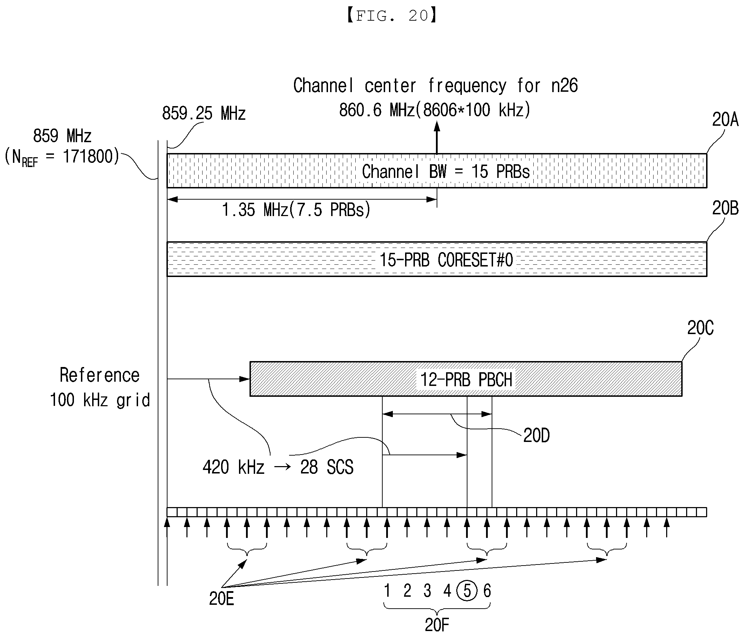

FIG. 20 illustrates another example of a valid offset value between CORESET #0 and a sync raster in a specific frequency band based on an embodiment of the present disclosure.

Referring to FIG. 20, 20A represents a channel bandwidth (15 PRBs) having a channel center frequency (860.6 MHz = 8606 * 100 kHz) for operating band n26. 20B represents a 15-PRB CORESET#0.

20C represents a 12-PRB PBCH based on a valid offset value of 420 kHz (= 28 SCS) among the six offset values described above.

20D represents a valid sync raster range

20E represents frequency positions based on the finer sync raster described above. Referring to Equation 3, the frequency positions may be calculated as follows.

$$N * 600 \text{ kHz} + M * 50 \text{ kHz} + A \text{ kHz}, N \in \{1:4998\}, M \in \{1,3,5\}, A = 300$$

[1] N=1432, M=1, 3, 5
[2] N=1433, M=1, 3, 5
[3] N=1434, M=1, 3, 5
[4] N=1435, M=1, 3, 5

20F indicates an index (5) that is allowed for a channel bandwidth having a center frequency of 860.6 MHz, among indices (1, 5, 6) of frequency positions of three 12-PRB PBCHs within the valid sync raster range.

Specifically, the three frequency positions belonging to 20D may be calculated as shown in the following (1) to (3).

(1) 860,250 kHz (860.25 MHz), N=1433, M=3 / Interval: 0.35 MHz (350 kHz)
(2) 860,750 kHz (860.75 MHz), N=1434, M=1 / Interval: 0.15 MHz (150 kHz)
(3) 860,850 kHz (860.85 MHz), N=1434, M=3 / Interval: 0.25 MHz (250 kHz)

Among the three frequency positions, the frequency position at which the interval from the channel center frequency of 860.6 MHz is a multiple of the SCS (15 kHz) is (2) 860.75 kHz.

As described above, for a channel bandwidth having a center frequency of 860.6 MHz in the n26 band, only the frequency position when the offset value is 420 kHz is allowed. In this case, the RB offset is 2, and $k_{SSB}$ is 4.

Combinations of the offset parameter value and the $k_{SSB}$ value may be supported by default or additionally supported based on the condition described in FIGS. 18 to 19 (where the interval is a multiple of the subcarrier spacing). The {offset value, $k_{SSB}$ value} allowed/supported for the SCS (15 kHz) may be {0, 8} and {2, 4}.

The method described above (i.e., the method described in [Method for supporting new (non-punctured) 12-PRB CORESET #0]) and the corresponding RB offset and $k_{SSB}$ values may be applied not only to a new (non-punctured) CORESET #0 but also to methods for supporting punctured CORESET #0 proposed below.

[Method for supporting punctured 20-PRB CORESET #0]

For narrowband scenario #2-2, 20-PRB CORESET #0 may be supported. The 20-PRB CORESET #0 may be supported by reusing the conventional 24-PRB CORESET #0. In other words, after performing PDCCH RE mapping based on the 24-PRB CORESET #0, a PDCCH may be transmitted based on REs/RBs/REGs/REG bundles/CCEs within the 20-PRB CORESET #0 frequency domain. Due to a bandwidth difference between the 24-PRB CORESET #0 before puncturing and the 20-PRB CORESET #0, an offset parameter may be applied using a value in the range of 0 to 4 in all supportable scenarios. If the performance difference according to the offset value is not significant, a portion of values within the range above (e.g., offset parameter value 0) may be set as the offset value of the CORESET #0 Table. When a plurality of offset values are available, a single value may be configured/indicated to a UE based on broadcast signaling of a base station.

[Method for supporting punctured 18-PRB CORESET#0]

For narrowband scenario #2-2, 18-PRB CORESET #0 may be supported. The 18-PRB CORESET #0 may be supported by reusing the conventional 24-PRB CORESET #0. In other words, after performing PDCCH RE mapping based on the 24-PRB CORESET #0, a PDCCH may be transmitted based on REs/RBs/REGs/REG bundles/CCEs within the 18-PRB CORESET #0 frequency domain. At this time, due to a bandwidth difference between the 24-PRB CORESET #0 before puncturing and the 18-PRB CORESET #0, an offset parameter may be applied using a value in the range of 6 to -2 in all supportable scenarios. If the performance difference according to the offset value is not significant, a portion of values within the range above (e.g., offset parameter value 0) may be set as the offset value of the CORESET #0 Table. When a plurality of offset values are available, a single value may be configured/indicated to a UE based on broadcast signaling of a base station.

[Method for supporting new (non-punctured) 18-PRB CORESET#0]

Instead of reusing the conventional 24-PRB CORESET #0, newly defined CORESET #0 may be utilized to support 18-PRB CORESET #0. Specifically, similar to the case of the new 12-PRB CORESET #0, a new CORESET #0 having a size of 18 PRBs may be supported. In other words, CORESET #0 having an 18-PRB size may be indicated without puncturing. For the new 18-PRB CORESET #0, legacy interleaved CORESET CCE-to-REG mapping may be selectively or always supported. When the mapping is supported, R = 3 may be supported, unlike the case of the new 12-PRB CORESET #0 (where R = 2). When supporting a 20-PRB transmission BW in narrowband scenario #2-2, an offset parameter value in the range of 0 to -2 may be applied. If the performance difference according to the offset value is not significant, a portion of values within the range above (e.g., offset parameter value 0) may be set as the offset value of the CORESET #0 Table. When a plurality of offset values are available, a single value may be configured/indicated to a UE based on broadcast signaling of a base station.

[Method for configuring new CORESET table (TS 38.213 Table 13-0)]

Based on the representative narrowband scenarios and the methods for supporting CORESET #0 in consideration of the corresponding scenarios, a new CORESET #0 table (TS 38.213 Table 13-0) for PDCCH transmission in a narrowband may be configured as shown in Table 9 below.

[Table 9]

| Table 13-0: Set of resource blocks and slot symbols of CORESET for Type0-PDCCH search space set when {SS/PBCH block, PDCCH} SCS is {15, 15} kHz for frequency bands with minimum channel bandwidth 3 MHz and channel bandwidth 3 MHz. Non-interleaved CCE-to-REG mapping applies for entries 6 and 7. | | | | |
|---|---|---|---|---|
| Index | SS/PBCH block and CORESET multiplexing pattern | Number of RBs $N_{RB}^{CORESET}$ | Number of Symbols $N_{symb}^{CORESET}$ | Offset (RBs) |
| 0 | 1 | 12 | 2 | -4 |
| 1 | 1 | 12 | 3 | -4 |
| 2 | 1 | 18 | 2 | 0 |
| 3 | 1 | 18 | 3 | 0 |
| 4 | 1 | 24 | 2 | 0 |
| 5 | 1 | 24 | 3 | 0 |
| 6 | 1 | 24 | 2 | 0 |
| 7 | 1 | 24 | 3 | 0 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

The reasons for which the entries in Table 9 are required have been described in the proposed methods for CORESET #0 above. The entries in Table 9 are defined to secure as many reserved fields as possible by employing only those entries absolutely required for forward compatibility. As previously described, the offset values are based on the offset definition method #A (legacy method, based on the PBCH BW before puncturing and CORESET #0 BW before puncturing), but the proposed method may be applied without being limited to a specific offset definition method. For example, the offset values in Table 9 may be replaced with those values based on method #B. As a specific example, an offset value of -4 may be replaced with 0, which is the value based on method #B.

To support more diverse configurations of CORESET #0 in the narrowband, some of the CORESET #0 configuration parameters may be set/indicated through broadcast signaling. The CORESET #0 configuration parameters may include the following parameters.

- Puncturing patterns of the 24-PRB CORESET #0

For example, the parameter related to the puncturing pattern may represent 15-PRB or 20-PRB after puncturing.

- (Additional) offset for the same CORESET #0 size

For example, the additional offset may be 0 or 4. In this case, a UE may calculate the offset value by adding the additional offset to the offset value in Table 9 (e.g., the offset of 24-PRB CORESET #0).

Number of symbols of CORESET#0 (e.g., 2 or 3)

Interleaved vs. non-interleaved CCE-to-REG mapping

For example, a parameter related to the mapping may indicate interleaved mapping or non-interleaved mapping.

- $n_{shift}$ control

For example, a parameter related to $n_{shift}$ may indicate an $n_{shift}$ value (0 or half the CORESET#0 size before puncturing) or an $n_{shift}$ offset value (to be added to the $n_{shift}$ offset value).

In a narrowband, a UE may determine CORESET#0 Table for PDCCH reception (between the existing table and Table 9) based on a sync raster through which the UE acquires the SSB during a cell search process. In other words, when accessing through a finer sync raster newly defined for narrowband, the UE may obtain CORESET#0 information by referring to Table 9. In the case of narrowband scenario #2, Table 9 is supported, and when accessing through an additional sync raster, CORESET#0 information may be obtained by referring to Table 9. Alternatively, when Table 9 is supported only under a specific condition in the narrowband scenario #2, or when Table 9 is supported by selection of a base station, whether to use Table 9 or an existing table (Table 13-1 of TS 38.213) may be configured/indicated through broadcast signaling.

Alternatively, when accessing through a specific band among NR operating bands, it may be instructed to always use CORESET#0 Table 9. In this case, the specific band may be n8/n26/n28 or n8/n26/n28/n100.

The overall base station/UE operation flow employing the methods above may be as follows.

A base station selects one of the entries in CORESET#0 Table 9 (or the existing Table 13-1) in consideration of the narrowband scenarios described above.

The base station configures/indicates the selected CORESET#0 Table entry information (e.g., index 0 of Table 9) based on broadcast signaling (e.g., MIB).

The base station configures the CORESET #0 based on the selected CORESET #0 configuration and transmits a PDCCH.

The UE obtains CORESET #0 related information by referring to the broadcast signaling (e.g., index 0) and the CORESET #0 Table (e.g., Table 9). The CORESET #0 related information may include the multiplexing pattern, the number of RBs $N_{RB}^{CORESET}$, the number of symbols $N_{symb}^{CORESET}$, and the offset defined in Table 9.

The UE receives the PDCCH based on the CORESET #0 according to the obtained CORESET #0 related information (e.g., offset).

Subsequently, the UE performs operations including reception of SIB1, reception of paging, and transmission of a PRACH for random access.

[Method for generating PDCCH DMRS]

According to the existing definition (Table 10 below), the reference point k for generating a PDCCH DMRS sequence during transmission of a PDCCH through CORESET #0 is subcarrier 0 of the lowest RB index of the CORESET #0.

[Table 10]

| |
| --- |
| 7.4.1.3.2 Mapping to physical resources |
| The UE shall assume the sequence $r_l(m)$ is mapped to resource elements $(k, l)_{p,\mu}$ according to $$a_{k,l}^{(p,\mu)} = \beta_{DMRS}^{PDCCH} \cdot r_l\left(3n + k'\right)$$ $$k = nN_{sc}^{RB} + 4k' + 1$$ $k' = 0, 1, 2$ <br> $n = 0, 1, ...$ <br> where the following conditions are fulfilled |
| - they are within the resource element groups constituting the PDCCH the UE attempts to decode if the higher-layer parameter *precoderGranularity* equals *sameAsREG-bundle,* <br> - all resource-element groups within the set of contiguous resource blocks in the CORESET where the UE attempts to decode the PDCCH if the higher-layer parameter *precoderGranularity* equals *allContiguousRBs.* |
| The reference point for k is |

(continued)

| | - subcarrier 0 of the lowest-numbered resource block in the CORESET if the CORESET is configured by the PBCH or by the *controlResourceSet-Zero* field in the *PDCCH-ConfigCommon* IE,<br>- subcarrier 0 in common resource block 0 otherwise |
| --- | --- |
| The quantity *l* is the OFDM symbol number within the slot.<br>The antenna port *p* = 2000.<br>A UE not attempting to detect a PDCCH in a CORESET shall not make any assumptions on the presence or absence of DM-RS in the CORESET.<br>In absence of CSI-RS configuration, and unless otherwise configured, the UE may assume PDCCH DM-RS and SS/PBCH block to be quasi co-located with respect to Doppler shift, Doppler spread, average delay, delay spread, and, when applicable, spatial Rx parameters.<br>... | |

When transmitting a PDCCH through CORESET #0 in a narrowband, considering a situation in which a PDCCH is transmitted through a portion of CORESET #0, an ambiguity may arise in the generation of a PDCCH DMRS sequence during PDCCH transmission through CORESET #0. To eliminate the ambiguity, a reference point k for generating the PDCCH DMRS sequence during transmission of a PDCCH through CORESET #0 in a narrowband may be determined by the following method.

For example, when method #1 (a method of using a new CORESET #0) is applied in a narrowband, subcarrier 0 with the lowest RB index of the new CORESET #0 may be determined as the reference point k for generating the PDCCH DMRS sequence. Subsequently, the PDCCH DMRS sequence may be generated based on the method defined in Table 10, and PDCCH transmission may be performed based on the generated PDCCH DMRS sequence.

For example, when method #2 (a method of reusing the conventional CORESET #0) is applied in a narrowband, subcarrier 0 with the lowest RB index of the CORESET #0 before puncturing may be determined as the reference point k for generating the PDCCH DMRS sequence. Subsequently, the PDCCH DMRS sequence may be generated in a manner defined in Table 10, and RE mapping may be performed. During PDCCH transmission, puncturing/truncation/drop may be performed together with the PDCCH.

For example, when method #2 (a method of reusing the conventional CORESET #0) is applied in a narrowband, subcarrier 0 with the lowest index of the punctured CORESET #0 or the PDCCH transmission/reception band may be determined as the reference point k for generating the PDCCH DMRS sequence. Subsequently, the PDCCH DMRS sequence is generated in a manner defined in Table 10, and RE mapping is performed. After that, PDCCH transmission may be carried out. The present embodiment may be a method applicable only to a scenario in which a UE receiving a PDCCH does not exist through the entire CORESET #0, i.e., a method applicable in a dedicated frequency band supporting only narrowband operation.

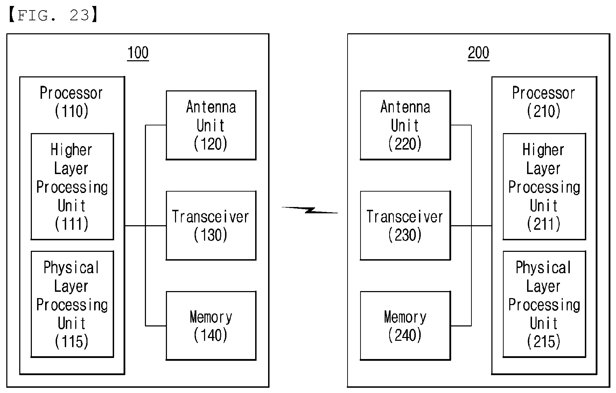

From an implementation aspect, the operations of the base station/UE according to the embodiments above (e.g., operations based on at least one of method #1, method #2, method #A, method #B, method #C, methods for supporting a punctured CORESET #0, methods for supporting a new CORESET #0, and a method for generating a PDCCH DMRS) may be processed by a device of FIG. 23 (e.g., processors 110 and 210 of FIG. 23) to be described later.

Also, the operations of the base station/UE according to the embodiments above (e.g., operations based on at least one of method #1, method #2, method #A, method #B, method #C, methods for supporting a punctured CORESET #0, methods for supporting a new CORESET #0, and a method for generating a PDCCH DMRS) may be stored in a memory (e.g., 140 and 240 of FIG. 23) in the form of instructions/programs (e.g., instructions or executable code) for driving at least one processor (e.g., 110 and 210 of FIG. 23).

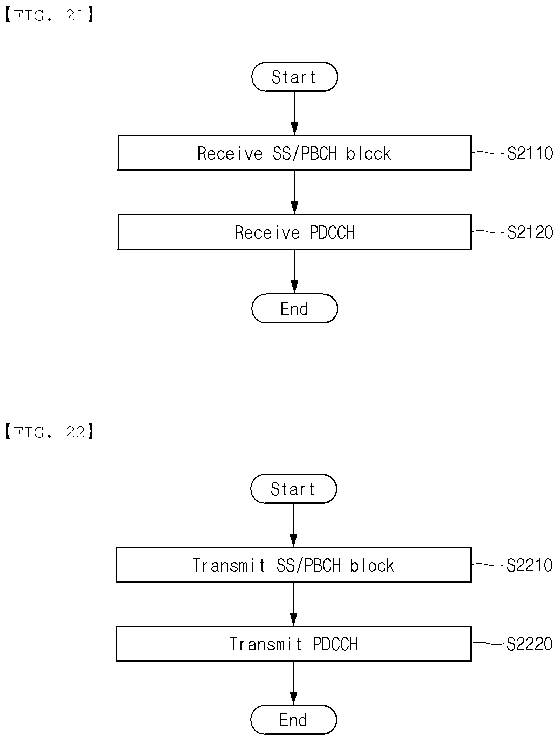

Hereinafter, the embodiments described above will be described in detail from the operational perspective of a UE/base station with reference to FIGS. 21 and 22. The methods described below are separately handled merely for the convenience of description, and it should be understood that part of one method may be replaced with part of another method or may be applied in combination with each other.

FIG. 21 is a flowchart illustrating a method performed by a UE according to an embodiment of the present disclosure.

Referring to FIG. 21, a method performed by a UE according to one embodiment of the present disclosure includes receiving an SS/PBCH block S2110 and receiving a PDCCH S2120.

In the S2110 step, the UE receives a Synchronization Signal/Physical Broadcast CHannel (SS/PBCH) block from a base station based on a synchronization raster for a channel bandwidth.

For example, the channel bandwidth may be a narrowband. As a specific example, the channel bandwidth may be 3 MHz. The number of Resource Blocks (RBs) based on the channel bandwidth may be 15.

For example, the SS/PBCH block may be an SS/PBCH block after puncturing based on at least one of the embodiments described above. Specifically, the time-frequency structure related to the SS/PBCH block (e.g., refer to FIG. 8, FIG. 9, and FIG. 13) may be based on puncturing.

The SS/PBCH block after the puncturing may be based on 12 resource blocks (RBs). The 12 resource blocks may be the remaining resource blocks excluding 8 resource blocks from among 20 resource blocks based on the time-frequency structure of a conventional SS/PBCH block (e.g., FIG. 7). As a specific example, the 12 resource blocks may be the remaining resource blocks excluding subcarriers based on subcarrier numbers 0 to 47 and 192 to 239 among subcarriers based on subcarrier numbers 0 to 239 within four Orthogonal Frequency Division Multiplexing (OFDM) symbols.

The channel bandwidth related to a cell search based on the SS/PBCH block may be smaller than 5 MHz. For example, the channel bandwidth may be 3 MHz.

In the S2120 step, the UE receives a Physical Downlink Control Channel (PDCCH) based on a Control Resource Set (CORESET) from the base station.

For example, the CORESET may be CORESET #0 based on one of the embodiments above.

For example, an offset may be determined based on a configuration related to the CORESET (e.g., the index in Table 9). The offset may be defined from the smallest Resource Block (RB) index of the CORESET to the RB index related to the SS/PBCH block. In other words, the offset may be a value in units of RBs.

According to one embodiment, based on i) the channel bandwidth being 3 MHz, ii) the Subcarrier Spacing (SCS) of the SS/PBCH block being 15 kHz, and iii) the SCS of the CORESET being 15 kHz: the offset may be one of i) 0 and ii) 2, and the RB index may be determined based on the first RB of the SS/PBCH block after puncturing. The present embodiment may be based on method #B and the method for supporting new (non-punctured) 12-RB CORESET #0. The offset may refer to the offset parameter value or RB offset. The offset may be defined with respect to the SCS of the CORESET.

Specifically, the RB index may be the smallest RB index of a common resource block (CRB) that overlaps with the first RB of the SS/PBCH block after the puncturing. Here, the common resource block may mean $N_{CRB}^{SSB}$ in Table 8.

For example, the configuration related to the CORESET and $k_{SSB}$ may be indicated based on broadcast signaling. Specifically, i) the configuration related to the CORESET and ii) $k_{SSB}$ may be indicated based on a Master Information Block (MIB) related to the SS/PBCH block.

For example, the configuration related to the CORESET may be determined by controlResourceSetZero included in the PDCCH-ConfigSIB1 parameter within the MIB. The controlResourceSetZero represents one of indices 0 to 15 in Table 9. The $k_{SSB}$ may be indicated by the ssb-SubcarrierOffset parameter in the MIB. The ssb-SubcarrierOffset parameter may be set to an integer from 0 to 15.

The $k_{SSB}$ may be a subcarrier offset from subcarrier 0 of the common resource block (e.g., $N_{CRB}^{SSB}$ in Table 8) to the lowest numbered subcarrier of the SS/PBCH block after the puncturing.

As described above, the relative position/interval between the SS/PBCH block after the puncturing and the CORESET may be determined based on the offset and the $k_{SSB}$. For example, the number of RBs from the lowest RB of the CORESET to the common resource block is determined by the offset, and the number of subcarriers from the lowest numbered subcarrier of the common resource block to the lowest numbered subcarrier of the SS/PBCH block after the puncturing is determined by the $k_{SSB}$. When the SCSs of the SS/PBCH block and the CORESET are the same at 15 kHz, the interval according to a sum of the offset and the $k_{SSB}$ also has to be a multiple of the SCS (15 kHz). Combinations of an offset and $k_{SSB}$ that satisfy the condition above will be described in detail below.

According to one embodiment, based on the offset being 0, the $k_{SSB}$ may be 8 (refer to FIG. 19). In this case, the interval may be 120 kHz (8 * 15 kHz). Based on the offset being 2, the $k_{SSB}$ may be 4 (refer to FIG. 20). One RB is defined as 12 consecutive subcarriers. The interval may be 420 kHz (2 * 12 * 15 (=360) kHz + 4 * 15 (=60) kHz).

According to one embodiment, the synchronization raster may be related to an operating band. For the channel bandwidth of 3 MHz, the operating band may be n26, n28, n31, n72, n85, n100, or n106.

A frequency position based on the synchronization raster may be determined based on the following equation.

[Equation]

$$frequency\ position = N * 600\ kHz + M * 50\ kHz + 300\ kHz$$

Here, N is an integer of 1 or more, and M may be 1, 3, or 5.

A frequency based on a channel raster within the operating band may be defined at 100 kHz intervals (e.g.,

$\Delta F_{Raster}$ in Table 11 below).

The following Table 11 illustrates operating bands according to conventional definitions and frequencies based on channel rasters (e.g., reference frequency).

[Table 11]

| 5.2 | Operating bands |
|---|---|

NR is designed to operate in the FR1 operating bands defined in Table 5.2-1.

**Table 5.2-1: NR operating bands in FR1**

| NR operating band | Uplink (UL) *operating band* BS receive / UE transmit $F_{UL\_low} - F_{UL\_high}$ | Downlink (DL) *operating band* BS transmit / UE receive $F_{DL\_low} - F_{DL\_high}$ | Duplex Mode |
|---|---|---|---|
| n26 | 814 MHz – 849 MHz | 859 MHz – 894 MHz | FDD |
| n28 | 703 MHz – 748 MHz | 758 MHz – 803 MHz | FDD |
| n31 | 452.5 MHz – 457.5 MHz | 462.5 MHz – 467.5 MHz | FDD |
| n72 | 451 MHz – 456 MHz | 461 MHz – 466 MHz | FDD |
| n85 | 698 MHz – 716 MHz | 728 MHz – 746 MHz | FDD |
| n100 | 874.4 MHz – 880 MHz | 919.4 MHz – 925 MHz | FDD |
| n106 | 896 MHz – 901 MHz | 935 MHz – 940 MHz | FDD |

5.4.2.1          NR-ARFCN and channel raster

RF reference frequencies are designated by an NR Absolute Radio Frequency Channel Number (NR-ARFCN) in the range (0...2016666) on the global frequency raster. The relation between the NR-ARFCN and the RF reference frequency $F_{REF}$ in MHz is given by the following equation, where $F_{REF\text{-}Offs}$ and $N_{Ref\text{-}Offs}$ are given in table 5.4.2.1-1 and $N_{REF}$ is the NR-ARFCN.

$$F_{REF} = F_{REF\text{-}Offs} + \Delta F_{Global} (N_{REF} - N_{REF\text{-}Offs})$$

**Table 5.4.2.1-1: NR-ARFCN parameters for the global frequency raster**

| Frequency range (MHz) | $\Delta F_{Global}$ (kHz) | $F_{REF\text{-}Offs}$ (MHz) | $N_{REF\text{-}Offs}$ | Range of $N_{REF}$ |
|---|---|---|---|---|
| 0 – 3000 | 5 | 0 | 0 | 0 – 599999 |
| 3000 – 24250 | 15 | 3000 | 600000 | 600000 – 2016666 |

5.4.2.3          Channel raster entries for each operating band

**Table 5.4.2.3-1: Applicable NR-ARFCN per operating band**

| NR operating band | $\Delta F_{Raster}$ (kHz) | Uplink Range of $N_{REF}$ (First – <Step size> – Last) | Downlink Range of $N_{REF}$ (First – <Step size> – Last) |
|---|---|---|---|
| n26 | 100 | 162800 – <20> – 169800 | 171800 – <20> – 178800 |
| n28 | 100 | 140600 – <20> – 149600 | 151600 – <20> – 160600 |
| n31 | 100 | 90500 – <20> – 91500 | 92500 – <20> – 93500 |
| n72 | 100 | 90200 – <20> – 91200 | 92200 – <20> – 93200 |
| n85 | 100 | 139600 – <20> – 143200 | 145600 – <20> – 149200 |
| n100 | 100 | 174880 – <20> – 176000 | 183880 – <20> – 185000 |
| n106[5] | 100 | 179200 – <20> – 180200 | 187000 – <20> – 188000 |

**[470]**

| NOTE 1: | The channel numbers that designate carrier frequencies so close to the operating band edges that the carrier extends beyond the operating band edge shall not be used. |
|---|---|

| | |
|---|---|
| NOTE 2: | The following $N_{REF}$ are allowed for operation in Band n46: see Table 5.4.2.3-2. |
| NOTE 3: | The following $N_{REF}$ are allowed for operation in Band n96: see Table 5.4.2.3-3. |
| NOTE 4: | The following $N_{REF}$ are allowed for operation in Band n102: see Table 5.4.2.3-4. |
| NOTE 5: | In the present version of the specification, only $N_{REF}$ 179800 and 187600 is applicable for 3 MHz channel bandwidth. |

For example, the number of RBs based on the channel bandwidth of 3 MHz may be 15.

For example, the SS/PBCH block after the puncturing may be based on 12 RBs.

An example of a combination of an offset and $k_{SSB}$, related to the condition of the SCS described with reference to Table 11, will be described in detail. When the channel bandwidth is 3 MHz, and the operating band is n106, a frequency based on the channel raster may be 938 MHz (5*187600 = 938,000 kHz). Since the channel bandwidth is 15 RB, a starting frequency of the channel bandwidth may be 938 MHz - 1.35 MHz (7.5 RB) = 936.65 MHz.

From the starting frequency, considering the six intervals (20 kHz to 520 kHz) shown in FIG. 18, the frequency positions of six 12-RB SS/PBCH blocks (12-RB PBCH) may be 1) 937.75 MHz, 2) 937.85 MHz, 3) 937.95 MHz, 4) 938.05 MHz, 5) 938.15 MHz, and 6) 938.25 MHz. Among the six frequency positions, those that may be calculated according to the equation are 1) 937.75 MHz, 5) 938.15 MHz, and 6) 938.25 MHz.

$$1)\ 937.75\ \text{MHz} = N(1562) * 600\ \text{kHz} + M(5) * 50\ \text{kHz} + 300\ \text{kHz} = 937,750\ \text{kHz}$$

$$5)\ 938.15\ \text{MHz} = N(1563) * 600\ \text{kHz} + M(1) * 50\ \text{kHz} + 300\ \text{kHz} = 938,150\ \text{kHz}$$

$$6)\ 938.25\ \text{MHz} = N(1563) * 600\ \text{kHz} + M(3) * 50\ \text{kHz} + 300\ \text{kHz} = 938,250\ \text{kHz}$$

Among the three frequency positions, the frequency position based on an interval that is a multiple of the SCS (420 kHz) is 5) 938.15 MHz. In other words, for a channel bandwidth of 3 MHz in operating band n106, the offset may be indicated as 2, and $k_{SSB}$ may be indicated as 4, according to the MIB.

The CORESET may include 12 RBs or 15 RBs. The RBs included in the CORESET may be those RBs obtained after puncturing. This will be described in detail below.

For example, the number of RBs may be determined based on the configuration related to the CORESET. The number of RBs may be 12 or 24. For example, the number of RBs may refer to $N_{RB}^{CORESET}$ in Table 9.

According to one embodiment, the CORESET may include 12 RBs based on the number of RBs being 12. The present embodiment may employ method #1 and the method for supporting new (non-punctured) 12-PRB CORESET #0.

According to one embodiment, based on the number of RBs being 24, the CORESET may include 15 RBs obtained based on puncturing 9 RBs among 24 RBs. The present embodiment may be based on method #2 and the method for supporting punctured 15-PRB CORESET #0.

The operations based on the S2110 to S2120 steps described above may be implemented by the device of FIG. 23. For example, the UE 200 may control one or more transceivers 230 and/or one or more memories 240 to perform operations based on the S2110 to S2120 steps.

Hereinafter, the embodiments described above will be described in detail from the perspective of base station operation.

The S2210 to S2220 steps, which will be described later, correspond to the S2110 to S2120 steps described in FIG. 21. In consideration of the correspondence, repeated descriptions will be omitted. In other words, specific descriptions of the base station operations described later may be replaced with the descriptions/embodiments of FIG. 21 corresponding to the base station operations.

FIG. 22 is a flowchart illustrating a method performed by a base station according to another embodiment of the present disclosure.

Referring to FIG. 22, a method performed by a base station according to another embodiment of the present disclosure includes transmitting an SS/PBCH block S2210 and transmitting a PDCCH S2220.

In the S2210 step, the base station transmits a Synchronization Signal/Physical Broadcast CHannel (SS/PBCH) block to the UE based on a synchronization raster for a channel bandwidth.

In the S2220 step, the base station transmits a Physical Downlink Control CHannel (PDCCH) to the UE based on a COntrol REsource SET (CORESET).

For example, an offset may be determined based on a configuration related to the CORESET (e.g., the index in Table 9). The offset may be defined from the smallest Resource Block (RB) index of the CORESET to an RB index related to the SS/PBCH block. In other words, the offset may be a value in units of RBs.

According to one embodiment, based on i) the channel bandwidth being 3 MHz, ii) the Subcarrier Spacing (SCS) of the SS/PBCH block being 15 kHz, and iii) an SCS of the CORESET being 15 kHz: the offset may be one of i) 0 and ii) 2, and the RB index may be determined based on the first RB of the SS/PBCH block after puncturing.

The operations based on the S2210 to S2220 steps described above may be implemented by the device of FIG. 23. For example, the base station 100 may control one or more transceivers 130 and/or one or more memories 140 to perform operations based on the S2210 to S2220 steps.

Hereinafter, A device to which an embodiment of the present disclosure is applicable (a device implementing the method/operation according to an embodiment of the present disclosure) is described below with reference to FIG. 23.

FIG. 23 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may perform downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) comprising:

   receiving a Synchronization Signal/Physical Broadcast CHannel (SS/PBCH) block based on a synchronization raster for a channel bandwidth; and
   receiving a Physical Downlink Control CHannel (PDCCH) based on a COntrol REsource SET (CORESET),
   wherein an offset is determined based on a configuration related to the CORESET,
   wherein the offset is defined from a smallest Resource Block (RB) index of the CORESET to an RB index related to the SS/PBCH block,
   wherein, based on i) the channel bandwidth being 3 MHz and ii) a SubCarrier Spacing (SCS) of the SS/PBCH block being 15 kHz and iii) an SCS of the CORESET being 15 kHz:

      the offset is one of i) 0 and ii) 2,
      the RB index is determined based on a first RB of the SS/PBCH block after puncturing.

2. The method of claim 1, wherein the RB index is a smallest RB index of a common resource block overlapping with the first RB of the SS/PBCH block after the puncturing.

3. The method of claim 2, wherein i) the configuration related to the CORESET and ii) $k_{SSB}$ are indicated based on a Master Information Block (MIB) related to the SS/PBCH block,
   wherein the $k_{SSB}$ is a subcarrier offset from a subcarrier 0 in the common resource block to a lowest-numbered subcarrier of the SS/PBCH block after the puncturing.

4. The method of claim 3, wherein the $k_{SSB}$ is 8 based on the offset being 0, and
   the $k_{SSB}$ is 4 based on the offset being 2.

5. The method of claim 1, wherein the offset is defined with respect to the SCS of the CORESET.

6. The method of claim 1, wherein the synchronization raster is related to an operating band.

7. The method of claim 6, wherein the operating band is n26, n28, n31, n72, n85, n100, or n106 for the channel bandwidth of 3 MHz.

8. The method of claim 7, wherein a frequency position based on the synchronization raster is determined based on the following equation:

   [Equation]
   $$\text{frequency position} = N \times 600 \text{ kHz} + M \times 50 \text{ kHz} + 300 \text{ kHz},$$

   where N is an integer greater than or equal to 1, and M may be 1, 3, or 5.

9. The method of claim 8, wherein, within the operating band, a frequency based on a channel raster is defined at a spacing of 100 kHz.

10. The method of claim 1, wherein the number of RBs based on the channel bandwidth of 3 MHz is 15.

**11.** The method of claim 1, wherein, after the puncturing, the SS/PBCH block is based on 12 RBs.

**12.** The method of claim 1, wherein the number of RBs is determined based on the configuration related to the CORESET, and

the number of RBs is 12 or 24.

**13.** The method of claim 12, wherein, based on the number of RBs being 24, the CORESET includes 15 RBs obtained based on puncturing of 9 RBs among the 24 RBs.

**14.** A user equipment (UE) comprising:

one or more transceivers;
one or more processors; and
one or more memories connected to the one or more processors and storing instructions,
wherein the instructions configure the one or more processors to perform all steps of a method according to any one of claims 1 to 13 based on being executed by the one or more processors.

**15.** A device comprising:

one or more memories; and
one or more processors operably connected to the one or more memories,
wherein the one or more memories store instructions that, based on being executed by the one or more processors, configure the one or more processors to perform all steps of a method according to any one of claims 1 to 13.

**16.** One or more non-transitory computer readable mediums storing instructions,
wherein the instructions executable by one or more processors configure the one or more processors to perform all steps of a method according to any one of claims 1 to 13.

**17.** A method performed by a base station comprising:

transmitting a Synchronization Signal/Physical Broadcast CHannel (SS/PBCH) block based on a synchronization raster for a channel bandwidth; and
transmitting a Physical Downlink Control CHannel (PDCCH) based on a COntrol REsource SET (CORESET),
wherein an offset is determined based on a configuration related to the CORESET,
wherein the offset is defined from a smallest Resource Block (RB) index of the CORESET to an RB index related to the SS/PBCH block,
wherein, based on i) the channel bandwidth being 3 MHz and ii) a SubCarrier Spacing (SCS) of the SS/PBCH block being 15 kHz and iii) an SCS of the CORESET being 15 kHz:

the offset is one of i) 0 and ii) 2,
the RB index is determined based on a first RB of the SS/PBCH block after puncturing.

**18.** A base station comprising:

one or more transceivers;
one or more processors; and
one or more memories connected to the one or more processors and storing instructions,
wherein the instructions configure the base station to perform all steps of a method according to claim 17 based on being executed by the one or more processors.

【FIG. 1】

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

【FIG. 2】

1 subframe = $14 \cdot 2^{\mu}$ OFDM symbols

$k=N_{grid}^{size,\mu} N_{sc}^{RB}-1$

$N_{grid}^{size,\mu} N_{sc}^{RB}$ subcarriers

1 resource block=$N_{sc}^{RB}$ subcarriers

Resource element(k,l)

k=0

l=0

$l=14 \cdot 2^{\mu}-1$

【FIG. 3】

INITIAL CELL SEARCH | SYSTEM INFORMATION RECEPTION | RANDOM ACCESS PROCEDURE | GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S301    S302    S303    S304    S305    S306    S307    S308

· DL/UL ACK/NACK
· UE CQI/PMI RI REPORT
  USING PUSCH AND PUCCH

【FIG. 4】

Subcarrier Number

239
192
182
56
47
0

P S S

P B C H

S S S

P B C H

P B C H

P B C H

0    1    2    3

OFDM symbol number

【FIG. 5】

SSB periodicity(default:20ms)

5ms
window

SSB#1    SSB#2    · · ·    SSB#L

SSB burst set

【FIG. 6】

Power On

PSS/SSS reception ——S610

PBCH reception ——S620

SIB1-scheduling PDCCH reception ——S630

SIB1 PDSCH reception ——S640

Ready for PRACH transmission
for initial access

【FIG. 7】

【FIG. 8】

frequency

time

Not transmitted
or punctured

Punctured
PBCH

Not transmitted
or punctured

【FIG. 9】

(a)

(b)

【FIG. 10】

Channel raster
(100*N kHz)
921 MHz

ECC Decision(20)02

Channel BW = 15 PRBs

919.6 MHz          1.35 MHz(7.5 PRBs)          920.95 MHz
919.4 MHz

12-PRB PBCH

270 kHz(1.5 PRBs)

920.73 MHz
Sync raster

Legacy sync raster          10A

Finer sync raster for
3MHz channel bandwidth

10B

Note : 1 PRB = 180 kHz

EP 4 761 412 A1

【FIG. 11】

Channel raster
(100*N kHz)
921.9 MHz

ECC Decision(20)02

Channel BW = 25 PRBs

919.6 MHz    2.25 MHz(12.5 PRBs)    921.85 MHz

919.4 MHz

20-PRB PBCH

450 kHz(2.5 PRBs)

921.45 MHz
Sync raster

Legacy sync raster                    11A

Finer sync raster for
3MHz channel bandwidth

11B

Note : 1 RB = 180 kHz

EP 4 761 412 A1

【FIG. 12】

subcarrier 0 of the SS/PBCH block

$k_{SSB} = 10$

subcarrier 0 in common resource block $N_{CRB}^{SSB}$

$N_{CRB}^{SSB} \rightarrow$ CRB#8

offsetToPointA

CRB#0

Point A

【FIG. 13】

【FIG. 14】

【FIG. 15】

Channel raster
(100*N kHz)

100*(N-14)+50 kHz

Channel BW = 15 PRBs

1.35 MHz(7.5 PRBs)

| 4 PRBs | 12-PRB PBCH | 4 PRBs |

270 kHz(1.5 PRBs)

Sync raster

$K_{SSB}$ = 0 SCS
RB Offset = -4

New 12-PRB CORESET#0

EP 4 761 412 A1

【FIG. 16】

Channel raster
(100*N kHz)

100*(N-14)+50 kHz

Channel BW = 15 PRBs

1.35 MHz(7.5 PRBs)

| 4 PRBs | 12-PRB PBCH | 4 PRBs |

270 kHz(1.5 PRBs)

Sync raster

8 SCS = 120 kHz

K_SSB = 8 SCS
RB Offset = -4

New 12-PRB CORESET#0

EP 4 761 412 A1

【FIG. 17】

Channel raster
(100*N kHz)

100*(N-14)+50 kHz

Channel BW = 15 PRBs

1.35 MHz(7.5 PRBs)

| 4 PRBs | 12-PRB PBCH | 4 PRBs |

270 kHz(1.5 PRBs)

Sync raster

28 SCS = 420 kHz

$K_{SSB}$ = 4 SCS
RB Offset = -2

New 12-PRB CORESET#0

**【FIG. 18】**

Channel center frequency
(Nch*100 kHz)

(Nch-14)*100+50 kHz

18A

Channel BW = 15 PRBs

1.35 MHz(7.5 PRBs)

18B

15-PRB CORESET#0

Reference
100 kHz grid

1: 20kHz          12-PRB PBCH

2: 120kHz         12-PRB PBCH

3: 220kHz         12-PRB PBCH

4: 320kHz         12-PRB PBCH    18C

5: 420kHz         12-PRB PBCH

Offset values   6: 520kHz         12-PRB PBCH

18D

1 ② 3  4 ⑤ 6

18E          18F

【FIG. 19】

Channel center frequency for n106
936.6 MHz(9366*100 kHz)

935.25 MHz

935 MHz
($N_{REF}$ = 187000)

Channel BW = 15 PRBs — 19A

1.35 MHz(7.5 PRBs)

15-PRB CORESET#0 — 19B

19C

Reference
100 kHz grid

2: 120kHz    12-PRB PBCH

19D

120 kHz → 8 SCS

19E

1 ② 3 4 5 6

19F

EP 4 761 412 A1

**【FIG. 20】**

Channel center frequency for n26
860.6 MHz(8606*100 kHz)

859.25 MHz

859 MHz
($N_{REF}$ = 171800)

Channel BW = 15 PRBs — 20A

1.35 MHz(7.5 PRBs)

15-PRB CORESET#0 — 20B

12-PRB PBCH — 20C

Reference
100 kHz grid

20D

420 kHz → 28 SCS

20E

1 2 3 4 ⑤ 6
20F

EP 4 761 412 A1

【FIG. 21】

```
                    ┌─────────┐
                    │  Start  │
                    └────┬────┘
                         │
                         ▼
    ┌──────────────────────────────────────┐
    │        Receive SS/PBCH block         │────S2110
    └───────────────────┬──────────────────┘
                        │
                        ▼
    ┌──────────────────────────────────────┐
    │            Receive PDCCH             │────S2120
    └───────────────────┬──────────────────┘
                        │
                        ▼
                    ┌─────────┐
                    │   End   │
                    └─────────┘
```

【FIG. 22】

```
                    ┌─────────┐
                    │  Start  │
                    └────┬────┘
                         │
                         ▼
    ┌──────────────────────────────────────┐
    │        Transmit SS/PBCH block        │────S2210
    └───────────────────┬──────────────────┘
                        │
                        ▼
    ┌──────────────────────────────────────┐
    │            Transmit PDCCH            │────S2220
    └───────────────────┬──────────────────┘
                        │
                        ▼
                    ┌─────────┐
                    │   End   │
                    └─────────┘
```

【FIG. 23】

## INTERNATIONAL SEARCH REPORT

| | International application No. |
|---|---|
| | **PCT/KR2024/010537** |

| **A.** | **CLASSIFICATION OF SUBJECT MATTER** |
|---|---|

**H04W 72/0453**(2023.01)i; **H04W 72/23**(2023.01)i; **H04W 48/10**(2009.01)i; **H04W 72/53**(2023.01)i; **H04J 11/00**(2006.01)i; **H04L 1/00**(2006.01)i; **H04L 27/26**(2006.01)i

According to International Patent Classification (IPC) or to both national classification and IPC

| **B.** | **FIELDS SEARCHED** |
|---|---|

Minimum documentation searched (classification system followed by classification symbols)

H04W 72/0453(2023.01); H04L 27/26(2006.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: synchronization raster, SS/PBCH block, CORESET, PDCCH, offset, smallest RB index, puncturing, subcarrier offset

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | SAMSUNG. Introduction of NR support for dedicated spectrum less than 5MHz for FR1. R1-2306288. 3GPP TSG RAN WG1 #113. Incheon, Korea. 12 June 2023.<br>See section 13; and tables 13-0 and 13-1. | 1-18 |
| Y | HUAWEI et al. Discussion on dedicated spectrum less than 5 MHz for FR1. R1-2304630, 3GPP TSG-RAN WG1 Meeting #113. Incheon, Korea. 15 May 2013.<br>See sections 2.1-2.2. | 1-18 |
| Y | QUALCOMM INCORPORATED. NR support for dedicated spectrum less than 5MHz for FR1. R1-2305364, 3GPP TSG RAN WG1 #113. Incheon, Korea. 13 May 2023.<br>See sections 2.2.1 and 2.2.3; and figures 5-6. | 3,4,11,13 |
| Y | ERICSSON. Spectrum less than 5 MHz - System parameters. R4-2308539, 3GPP TSG-RAN4 Meeting #107. Incheon, Korea. 15 May 2023.<br>See section 2.2.2. | 8,9 |
| A | US 2021-0360545 A1 (TELEFONAKTIEBOLAGET LM ERICSSON (PUBL)) 18 November 2021 (2021-11-18)<br>See paragraph [0123]; and figure 19. | 1-18 |

☐ Further documents are listed in the continuation of Box C.     ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **14 November 2024** | **14 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010537**

| Patent document cited in search report | Publication date (day/month/year) | Patent family member(s) | Publication date (day/month/year) |
|---|---|---|---|
| US 2021-0360545 A1 | 18 November 2021 | WO 2019-097007 A1 | 23 May 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical channels and modulation. *3GPP TS 38.211*
- Multiplexing and channel coding. *3GPP TS 38.212*
- Physical layer procedures for control. *3GPP TS 38.213*
- Physical layer procedures for data. *3GPP TS 38.214*
- Physical layer measurements. *3GPP TS 38.215*
- NR and NG-RAN Overall Description. *3GPP TS 38.300*
- User Equipment (UE) procedures in idle mode and in RRC inactive state. *3GPP TS 38.304*
- Medium Access Control (MAC) protocol. *3GPP TS 38.321*
- Radio Link Control (RLC) protocol. *3GPP TS 38.322*
- Packet Data Convergence Protocol (PDCP). *3GPP TS 38.323*
- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*
- Application layer support for V2X services; Functional architecture and information flows. *3GPP TS 23.287*
- System Architecture for the 5G System. *3GPP TS 23.501*
- Procedures for the 5G System. *3GPP TS 23.502*
- Policy and Charging Control Framework for the 5G System; Stage 2. *3GPP TS 23.503*
- Non-Access-Stratum (NAS) protocol for 5G System (5GS); Stage 3. *3GPP TS 24.501*
- Access to the 3GPP 5G Core Network (5GCN) via non-3GPP access networks. *3GPP TS 24.502*
- User Equipment (UE) policies for 5G System (5GS); Stage 3. *3GPP TS 24.526*